# EUROPEAN PATENT APPLICATION

(11) **EP 4 711 917 A1**
(43) Date of publication of application: **18.03.2026**
(21) Application number: 24824969.0
(22) Date of filing: 29.03.2024
(51) Int. Cl.: G06F 8/65

(54) **INSTANT APPLICATION DOWNLOADING METHOD AND RELATED DEVICE**

(30) Priority: 21.06.2023 CN 202310747702
(71) Applicant: Huawei Technologies Co., Ltd., Shenzhen, Guangdong 518129 (CN)
(72) Inventor: YU, Yunfan, Shenzhen, Guangdong 518129 (CN)
(74) Representative: Isarpatent
(86) International application number: PCT/CN2024/084690
(87) International publication number: WO 2024/260067

(57) **Abstract**

Embodiments of this application provide a download method for an installation-free application, and a related device, to quickly start a function or an interface of the installation-free application. For example, when a terminal needs to start a first application (installation-free application), the terminal downloads a first application software package of the first application from a server. The first application software package includes a configuration file, the configuration file includes indication information, and the indication information indicates a second application software package of a second application. The terminal may download the second application software package of the second application in advance based on the indication information. In this way, when the terminal needs to start a function or an interface corresponding to the second application software package (for example, when an operation used to start the function or the interface corresponding to the second application software package is received), quick starting can be implemented, to implement tap to use effect.

## Description

### CROSS-REFERENCE TO RELATED APPLICATIONS

This application claims priority to Chinese Patent Application No. 202310747702.5, filed with the China National Intellectual Property Administration on June 21, 2023 and entitled "DOWNLOAD METHOD FOR INSTALLATION-FREE APPLICATION, AND RELATED DEVICE", which is incorporated herein by reference in its entirety.

### TECHNICAL FIELD

This application relates to the field of electronic technologies, and in particular, to a download method for an installation-free application, and a related device.

### BACKGROUND

With the development of internet technologies, applications (applications, APPs) that are free of installation become popular. An installation procedure is not required for an application that is free of installation (referred to as an installation-free application for short). A user may tap an application icon to directly download the installation-free application from a server and run the installation-free application. The installation-free application includes one or more application software packages. Functions implemented by different application software packages are different, and each application software package may be downloaded independently.

Currently, when a terminal needs to use a function, the terminal downloads an application software package corresponding to the function. For example, when receiving an operation used to start a function, the terminal downloads an application software package corresponding to the function, and when receiving an operation used to start another function, the terminal downloads an application software package corresponding to the another function. Generally, it takes time to download an application software package, that is, it takes some time to wait for starting a function each time. In this case, tap to use cannot be implemented in a real sense, affecting user experience.

### SUMMARY

Embodiments of this application provide a download method for an installation-free application, and a related device, to quickly start a function or an interface of the installation-free application.

According to a first aspect, a download method for an installation-free application is provided. The method may be applied to a terminal. The method includes: sending a first request to a server, where the first request is used to request to download a first application, and the first application is an installation-free application; receiving a first application software package sent by the server, where the first application software package is used to implement at least one function or interface of the first application, the first application software package includes a configuration file, the configuration file includes indication information, the indication information indicates a second application software package, and the second application software package is used to implement at least one function or interface of a second application; sending a second request to the server based on the indication information, where the second request is used to request to download the second application software package; and receiving the second application software package sent by the server.

It should be noted that currently, when receiving an operation used to start a function, the terminal downloads an application software package corresponding to the function. Because downloading takes time, the function cannot be started in time. In this embodiment of this application, the first application software package of the first application includes the configuration file, and the indication information in the configuration file indicates the second application software package of the second application. After downloading the first application software package, the terminal may download the second application software package of the second application based on the indication information in the configuration file in the first application software package. In other words, the terminal may download the second application software package before receiving an operation (an operation used to start a function corresponding to the second application software package). In this way, because the second application software package has been downloaded in advance, when receiving the operation (the operation used to start the function corresponding to the second application software package), the terminal can quickly start the function corresponding to the second application software package, to implement a tap to use effect, so as to improve user experience.

In a possible design, the second application and the first application are a same application or different applications.
1. The second application and the first application are the same application. In this case, the first application software package and the second application software package are used to implement different functions or interfaces of the same application.

For example, the first application software package is used to implement a first function, and the second application software package is used to implement a second function or a second interface. For another example, the first application software package is used to implement a first interface, and the second application software package is used to implement a second function or a second interface. For example, the first application software package is used to implement the first interface, and the second application software package is used to implement the second interface. In this case, the second interface is associated with the first interface. For example, the second interface is a previous interface or a next interface of the first interface, or is an interface that is started most frequently on the first interface. Therefore, in this embodiment of this application, different functions or interfaces of the same application can be quickly started.

In a possible design, the second application and the first application satisfy at least one of the following:
the second application and the first application belong to a same developer; or
the second application and the first application are pre-configured associated applications; or
the second application and the first application are type-related applications; or
a quantity of times of switching between the second application and the first application is greater than a preset quantity of times.

In this embodiment of this application, after downloading the first application software package of an application (the first application), the terminal may download the second application software package of another application (the second application) based on the indication information in the configuration file in the first application software package. When the terminal needs to start the second application (for example, receives the operation used to start the function corresponding to the second application software package), quick starting can be implemented.

In a possible design, sending the second request to the server includes: sending the second request to the server when a function or an interface corresponding to the first application software package is started. Therefore, the terminal can start the function or the interface corresponding to the first application software package before the second application software package is completely downloaded, and can download the second application software package of the second application from the server when starting the function or the interface corresponding to the first application software package. This reduces waiting time of the user and improves user experience.

In a possible design, before sending the second request to the server, the method further includes: outputting first prompt information, where the first prompt information indicates whether to download the second application software package; and receiving a first confirmation instruction, where the first confirmation instruction instructs to confirm downloading of the second application software package.

In this embodiment of this application, the first application software package of the first application includes the configuration file, and the indication information in the configuration file indicates the second application software package of the second application. A user on a terminal side may choose to download or not download the second application software package. For example, to save memory, the user may not download the second application software package, or the user may download the second application software package if the user is interested in the second application. If the second application software package is downloaded, when the terminal receives the operation used to start the function/interface corresponding to the second application software package, the function/interface corresponding to the second application software package can be quickly started because the second application software package has been downloaded in advance, to implement tap to use.

In a possible design, the indication information further indicates the terminal to download a third application software package, and before sending the second request to the server, the method further includes: outputting second prompt information, where the second prompt information indicates whether to download the second application software package and the third application software package; and receiving a second confirmation instruction, where the second confirmation instruction instructs to confirm downloading of the second application software package; and sending the second request to the server includes: sending the second request to the server, where the second request includes a package name of the second application software package and does not include a package name of the third application software package.

In this embodiment of this application, the first application software package of the first application includes the configuration file, and the indication information in the configuration file indicates the second application software package and the third application software package. The user on the terminal side may choose to download any or both of the second application software package and the third application software package. For example, if the user considers that memory of the terminal is insufficient or the user is not interested in the second application, the user may download only the second application software package and does not download the third application software package. In this case, the second request sent by the terminal to the server includes only the package name of the second application software package and does not include the package name of the third application software package. In this manner, the user on the terminal side may perform selection based on a requirement of the user, and experience is good.

In a possible design, before sending the second request to the server, the method further includes: determining that the terminal meets at least one of the following: A state of charge of the device is greater than a preset threshold, remaining memory is greater than preset memory, or a current load of the processor is less than a preset load.

In this embodiment of this application, the terminal may choose to download or not to download the second application software package. For example, when determining that there is a large amount of remaining memory, the terminal may perform downloading; otherwise, the terminal may not perform downloading. If downloading is performed, the function or the interface corresponding to the second application software package may be quickly started. If the second application software package is not downloaded, frame freezing caused by a decrease in a running rate due to insufficient memory of the terminal can be avoided.

In a possible design, the indication information includes the package name of the second application software package.

In a possible design, the indication information further includes at least one of a package name of the second application, a first primary-secondary tag, and a second primary-secondary tag; the first primary-secondary tag indicates that the second application software package is a primary package or a secondary package of the first application software package; and the second primary-secondary tag indicates that the second application is a primary application or a secondary application of the first application.

In a possible design, that the first application software package is used to implement the at least one function or interface of the first application includes: The first application software package is used to start a home page of the first application.

Generally, when the terminal starts an application, a home page of the application is started first. Therefore, when the terminal downloads an installation-free application, an application software package first downloaded is used to start a home page. In this embodiment of this application, the application software package (the first application software package) corresponding to the home page includes the configuration file, and the configuration file includes the indication information indicating the second application software of the second application. Therefore, the terminal may download the second application software package of the second application in advance based on the indication information, so that when an operation used to start a function corresponding to the second application software package is received, quickly starting can be implemented.

In a possible design, the indication information indicates a plurality of application software packages, the plurality of application software packages include the second application software package, and the second request is used to request to download the plurality of application software packages; and the method further includes: receiving another application software package sent by the server, where the another application software package is an application software package other than the second application software package in the plurality of application software packages. In other words, the terminal downloads all the plurality of application software packages indicated by the indication information, so that a function or an interface corresponding to any one of the plurality of application software packages can be quickly started. The another application software package and the second application software package may be sent together or separately.

In a possible design, the second request is used to request to download all application software packages of the second application, all the application software packages include the second application software package, and receiving the second application software package sent by the server includes: receiving all the application software packages sent by the server.

In other words, the first application software package includes the configuration file, the configuration file includes the indication information, and the indication information indicates only one application software package (the second application software package) of the second application. The terminal downloads all the application software packages of the second application based on the indication information. Because the indication information indicates only one application software package of the second application, and does not need to indicate all the application software packages, an amount of information is small, and fewer transmission resources are consumed. In addition, the terminal downloads all the application software packages of the second application based on prompt information. When the terminal needs to start any function or interface of the second application, the terminal can quickly start the function or the interface.

According to a second aspect, a download method for an installation-free application is further provided. The method may be applied to a terminal. The method includes: sending a first request to a server, where the first request is used to request to download a first application, and the first application is an installation-free application; and receiving a first application software package and a second application software package that are sent by the terminal, where the first application software package is used to implement at least one function or interface of the first application, and the second application software package is used to implement at least one function or interface of a second application, where the second application and the first application are different applications.

In this embodiment of this application, when requesting to download an application (the first application), the terminal downloads the first application software package of the application and the second application software package of another application (the second application) together. Because the second application software package has been downloaded in advance, when receiving an operation used to start the second application (for example, an operation used to start a function corresponding to the second application software package), the terminal can quickly start the second application, to implement tap to use, so as to improve user experience.

In a possible design, the second application and the first application satisfy at least one of the following:
the second application and the first application belong to a same developer; or
the second application and the first application are pre-configured associated applications; or
the second application and the first application are type-related applications; or
a quantity of times of switching between the second application and the first application is greater than a preset quantity of times.

In a possible design, the first application software package includes a configuration file, and the configuration file includes indication information. The indication information indicates the second application software package.

In a possible design, the indication information includes a package name of the second application software package.

In a possible design, the indication information further includes at least one of a package name of the second application, a first primary-secondary tag, and a second primary-secondary tag; the first primary-secondary tag indicates that the second application software package is a primary package or a secondary package of the first application software package; and the second primary-secondary tag indicates that the second application is a primary application or a secondary application of the first application.

In a possible design, that the first application software package is used to implement the at least one function or interface of the first application includes: The first application software package is used to start a home page of the first application.

In a possible design, that the second application software package is used to implement the at least one function or interface of the second application includes: The second application software package is used to start a home page of the second application.

According to a third aspect, a download method for an installation-free application is further provided. The method may be applied to a server. The method includes: receiving a first request sent by a terminal, where the first request is used to request to download a first application, and the first application is an installation-free application; sending a first application software package to the terminal, where the first application software package is used to implement at least one function or interface of the first application, the first application software package includes a configuration file, the configuration file includes indication information, the indication information indicates a second application software package, and the second application software package is used to implement at least one function or interface of a second application; receiving a second request sent by the terminal, where the second request is used to request to download the second application software package; and sending the second application software package to the terminal.

It should be noted that currently, a configuration file in an application software package does not include indication information indicating another application software package. In this embodiment of this application, the first application software package of the first application includes the configuration file, and the indication information is added to the configuration file. The indication information indicates the second application software package of the second application. In short, there is a binding relationship between the first application software package of the first application and the second application software package of the second application. The binding relationship is indicated to the terminal via the indication information in the configuration file in the first application software package, to facilitate promotion of the second application to the terminal.

In a possible design, the second application and the first application are a same application or different applications.

In a possible design, the second application and the first application are the same application, and the first application software package and the second application software package are used to implement different functions or interfaces of the same application.

In a possible design, the second application and the first application satisfy at least one of the following:
the second application and the first application belong to a same developer; or
the second application and the first application are pre-configured associated applications; or
the second application and the first application are type-related applications; or
a quantity of times of switching between the second application and the first application is greater than a preset quantity of times.

In a possible design, the indication information further indicates a third application software package, and the second request includes a package name of the second application software package and does not include a package name of the third application software package.

In a possible design, the indication information includes a first list, and the first list includes the package name of the second application software package.

In a possible design, the indication information further includes at least one of a package name of the second application, a first primary-secondary tag, and a second primary-secondary tag; the first primary-secondary tag indicates that the second application software package is a primary package or a secondary package of the first application software package; and the second primary-secondary tag indicates that the second application is a primary application or a secondary application of the first application.

In a possible design, that the first application software package is used to implement the at least one function or interface of the first application includes: The first application software package is used to start a home page of the first application.

In a possible design, the indication information indicates a plurality of application software packages, the plurality of application software packages include the second application software package, and the second request is used to request to download the plurality of application software packages; and the method further includes: sending another application software package to the terminal, where the another application software package is an application software package other than the second application software package in the plurality of application software packages.

In a possible design, the second request is used to request to download all application software packages of the second application, all the application software packages include the second application software package, and sending the second application software package to the terminal includes: sending all the application software packages of the second application to the terminal.

According to a fourth aspect, a download method for an installation-free application is further provided. The method may be applied to a server. The method includes: receiving a first request sent by a terminal, where the first request is used to request to download a first application, and the first application is an installation-free application; determining a first application software package of the first application based on the first request, where the first application software package is used to implement at least one function or interface of the first application, the first application software package includes a configuration file, the configuration file includes indication information, the indication information indicates a second application software package, and the second application software package is used to implement at least one function or interface of a second application; and sending the first application software package and the second application software package to the terminal based on the indication information.

It should be noted that currently, each time the server receives a request, the server delivers only an application software package requested by the request. In this embodiment of this application, when receiving the first request used to request to download the first application, the server determines the first application software package of the first application. The first application software package includes the configuration file, and the indication information in the configuration file indicates the second application software package of the second application. The server may determine the second application software package of the second application based on the indication information, and then deliver the first application software package and the second application software package to the terminal together. In this way, the terminal can quickly start a function or an interface corresponding to the second application software package.

In a possible design, the second application and the first application are a same application or different applications.

In a possible design, the second application and the first application are the same application, and the first application software package and the second application software package are used to implement different functions or interfaces of the same application.

In a possible design, the second application and the first application satisfy at least one of the following:
the second application and the first application belong to a same developer; or
the second application and the first application are pre-configured associated applications; or
the second application and the first application are type-related applications; or
a quantity of times of switching between the second application and the first application is greater than a preset quantity of times.

In a possible design, the indication information further indicates a third application software package, and the second request includes a package name of the second application software package and does not include a package name of the third application software package.

In a possible design, the indication information includes a first list, and the first list includes the package name of the second application software package.

In a possible design, the indication information further includes at least one of a package name of the second application, a first primary-secondary tag, and a second primary-secondary tag; the first primary-secondary tag indicates that the second application software package is a primary package or a secondary package of the first application software package; and the second primary-secondary tag indicates that the second application is a primary application or a secondary application of the first application.

In a possible design, that the first application software package is used to implement the at least one function or interface of the first application includes: The first application software package is used to start a home page of the first application.

In a possible design, the indication information indicates a plurality of application software packages, the plurality of application software packages include the second application software package, and the second request is used to request to download the plurality of application software packages; and the method further includes: sending another application software package to the terminal, where the another application software package is an application software package other than the second application software package in the plurality of application software packages.

In a possible design, the second request is used to request to download all application software packages of the second application, all the application software packages include the second application software package, and sending the second application software package to the terminal includes: sending all the application software packages of the second application to the terminal.

According to a fifth aspect, a communication system is further provided. The communication system includes a server and a terminal.

The terminal is configured to perform the method according to the first aspect or the second aspect.

The server is configured to perform the method according to the third aspect or the fourth aspect.

According to a sixth aspect, an electronic device is further provided. The electronic device includes:
a processor, a memory, and one or more programs.

The one or more programs are stored in the memory. The one or more programs include instructions. When the instructions are executed by the processor, the electronic device is enabled to perform the method according to the first aspect or the second aspect.

According to a seventh aspect, an electronic device is further provided. The electronic device includes:
a processor, a memory, and one or more programs.

The one or more programs are stored in the memory. The one or more programs include instructions. When the instructions are executed by the processor, the electronic device is enabled to perform the method according to the third aspect or the fourth aspect.

According to an eighth aspect, a computer-readable storage medium is further provided. The computer-readable storage medium is configured to store a computer program. When the computer program is run on a computer, the computer is enabled to perform the method according to the first aspect or the second aspect.

According to a ninth aspect, a computer-readable storage medium is further provided. The computer-readable storage medium is configured to store a computer program. When the computer program is run on a computer, the computer is enabled to perform the method according to the third aspect or the fourth aspect.

According to a tenth aspect, a computer program product is further provided. The computer program product includes a computer program. When the computer program is run on a computer, the computer is enabled to perform steps in the method according to the first aspect or the second aspect.

According to an eleventh aspect, a computer program product is further provided. The computer program product includes a computer program. When the computer program is run on a computer, the computer is enabled to perform the method according to the third aspect or the fourth aspect.

According to a twelfth aspect, an embodiment of this application further provides a chip. The chip is coupled to a memory in an electronic device, and is configured to: invoke a computer program stored in the memory and perform the technical solutions according to the first aspect or the second aspect of embodiments of this application. In embodiments of this application, "coupling" means that two components are directly or indirectly combined with each other.

According to a thirteenth aspect, an embodiment of this application further provides a chip. The chip is coupled to a memory in an electronic device, and is configured to: invoke a computer program stored in the memory and perform the technical solutions according to the third aspect or the fourth aspect of embodiments of this application. In embodiments of this application, "coupling" means that two components are directly or indirectly combined with each other.

For technical effects that can be achieved by the second aspect to the thirteenth aspect, refer to descriptions of the technical effects that can be achieved by corresponding design solutions in the first aspect. Details are not described herein again in this application.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3(a) to FIG. 3(e) are a diagram of starting an installation-free application according to an embodiment of this application;
FIG. 4(a) to FIG. 4(d) are another diagram of starting an installation-free application according to an embodiment of this application;
FIG. 5(a) to FIG. 5(e) are still another diagram of starting an installation-free application according to an embodiment of this application;
FIG. 6 is a schematic flowchart of a download method for an installation-free application according to an embodiment of this application;
FIG. 7 is another schematic flowchart of a download method for an installation-free application according to an embodiment of this application;
FIG. 8 is still another schematic flowchart of a download method for an installation-free application according to an embodiment of this application;
FIG. 9 is yet another schematic flowchart of a download method for an installation-free application according to an embodiment of this application;
FIG. 10 is still yet another schematic flowchart of a download method for an installation-free application according to an embodiment of this application; and
FIG. 11 is another diagram of an electronic device according to an embodiment of this application.

### DESCRIPTION OF EMBODIMENTS

The following describes some terms in embodiments of this application, to facilitate understanding of a person skilled in the art.
(1) An installation process does not need to be implemented for an installation-free application. After downloading an application software package of the installation-free application, a terminal can directly run the installation-free application, to facilitate user operations. For example, types of the installation-free application may include a video type, an audio type, an image photographing/editing type, a shopping type, a news type, and a communication type based on a function of the installation-free application. For example, applications of the image photographing type may include a camera application, a picture edition application, and a picture or video edition application. For example, applications of the video type may include TikTok^{®}, iQIYI^{®}, and Tencent video^{®}. For example, applications of the audio type may include Kugou music^{®}, and QQ music^{®}. For example, applications of the shopping type include Taobao^{®}, JD^{®}, Air ticket purchase^{®}, Train ticket purchase^{®}, and Meituan^{®}. For example, applications of the news type include Toutiao^{®}, Baidu^{®}, Weibo^{®}, and Zhihu^{®}. For example, applications of the communication type include WeChat^{®}, QQ^{®}, and Express delivery.
(2) An application software package is a software package used to implement a function/interface of an installation-free application. One installation-free application may include one or more application software packages. Each application software package may be downloaded independently. The Harmony operating system (Harmony OS) is used as example. The application software package may be, for example, a Harmony OS ability package (Harmony OS Ability Package, HAP) package. It may be understood that one installation-free application includes one or more functions/interfaces, a same function/interface may be implemented by one or more application software packages, and different functions/interfaces correspond to different application software packages. It should be noted that, for ease of understanding, in this specification, an example in which one function/interface corresponds to one application software package, different functions/interfaces correspond to different application software packages, and the application software package is an HAP package is used for description.
(3) In embodiments of this application, "at least one" includes one or more, and "a plurality of" means two or more. In addition, it should be understood that in descriptions of this specification, words such as "first" and "second" are merely intended for purposes of description, and should not be understood as expressing or implying relative importance or a sequence. For example, a first application and a second application do not indicate importance degrees of the first application and the second application or a sequence of the first application and the second application, and are merely used for differentiated description. A term "and/or" in embodiments of this application describes only an association relationship and indicates that three relationships may exist. For example, A and/or B may indicate the following three cases: Only A exists, both A and B exist, and only B exists. In addition, a character "/" in this specification generally indicates an "or" relationship between the associated objects.
(4) The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application.
(5) Reference to "an embodiment", "some embodiments", or the like described in this specification indicates that one or more embodiments of this specification include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner.
(6) According to the context, the term "when" or "after" used in this specification may be interpreted as a meaning of "if" or "after" or "in response to determining" or "in response to detecting". Similarly, according to the context, the phrase "when it is determined that..." or "if it (a stated condition or event) is detected" may be interpreted as a meaning of "if it is determined that...", "in response to determining...", "when it (a stated condition or event) is detected", or "in response to detecting (a stated condition or event)".

A download method for an installation-free application provided in embodiments of this application is applicable to a system. For example, the system includes a terminal and a server. The terminal may be a portable electronic device like a mobile phone, a tablet computer, or a notebook computer; or may be a wearable device like a watch or a band; or may be a virtual reality (Virtual Reality, VR) device, an augmented reality (Augmented Reality, AR) device, a mixed reality (Mixed Reality, MR) device, or the like. A specific type of the terminal is not limited in embodiments of this application. The server may be various types of servers, such as a cloud server or an application server. This is not limited in embodiments of this application. The server includes all application software packages of the installation-free application. The terminal may download the application software package of the installation-free application from the server, to run the installation-free application. A specific implementation process is described below.

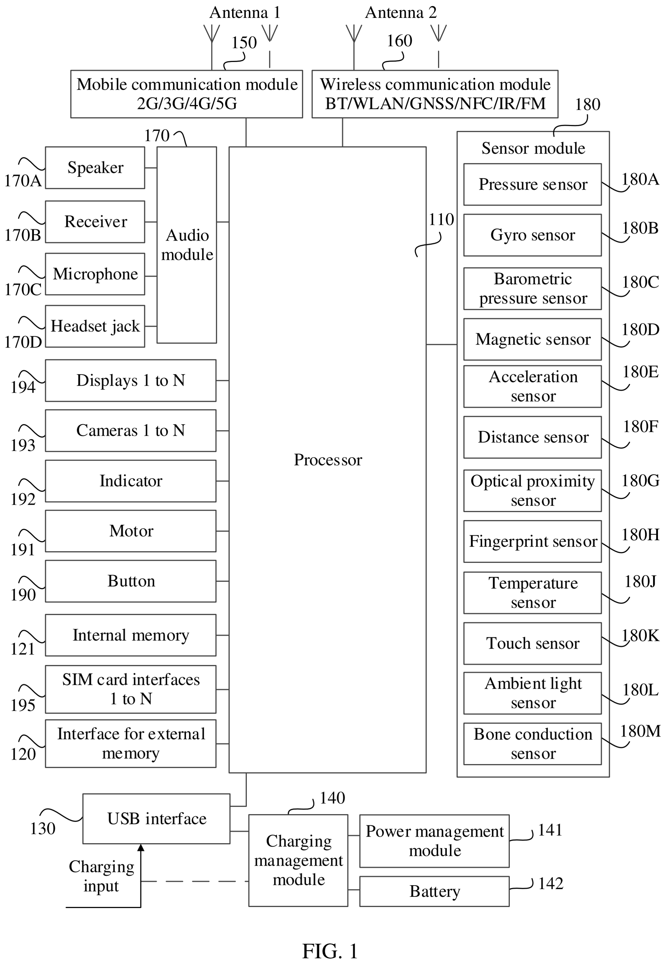

FIG. 1 is a diagram of a structure of an electronic device. The electronic device may be, for example, a terminal in a system. As shown in FIG. 1, the electronic device may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device. The controller may generate an operation control signal based on instruction operation code and a time sequence signal, to complete control of instruction reading and instruction execution. A memory may also be disposed in the processor 110, and is configured to store instructions and data. In some embodiments, the memory in the processor 110 is a cache. The memory may store instructions or data that has been used or is cyclically used by the processor 110. If the processor 110 needs to use the instruction or the data again, the processor may directly invoke the instruction or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 and a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 and the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device, or may be configured to connect to a headset for playing an audio through the headset. The interface may be further configured to connect to another electronic device like an AR device.

It may be understood that an interface connection relationship between the modules that is shown in embodiments of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device may be implemented through the antenna 1, the antenna 2, the mobile communication module 150, the wireless communication module 160, the modem processor, the baseband processor, and the like. The antenna 1 and the antenna 2 are configured to: transmit and receive electromagnetic wave signals. Each antenna of the electronic device may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device by using a wireless communication technology.

The display 194 is configured to display a display interface of an application, and the like. The display 194 includes a display panel. In some embodiments, the electronic device may include one or more displays 194.

The electronic device 100 may implement an image shooting function through the ISP, the camera 193, the video codec, the GPU, the display 194, the application processor, and the like. The ISP is configured to process data fed back by the camera 193.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage region and a data storage region. The program storage region may store an operating system, software code of at least one application program, and the like. The data storage region may store data (for example, an image or a video) and the like that are generated during use of the electronic device. In addition, the internal memory 121 may include a high-speed random access memory, or may include a nonvolatile memory, for example, at least one magnetic disk storage device, a flash memory device, or a universal flash memory.

The interface 120 for external memory may be configured to connect to an external storage card, for example, a micro SD card, to extend a storage capability of the electronic device. The external storage card communicates with the processor 110 through the interface 120 for external memory, to implement a data storage function. For example, files such as images or videos are stored in the external storage card.

The electronic device may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music through one or more loudspeakers 170A, or may be used in a speaker scenario, for example, answering a hands-free call.

The receiver 170B, also referred to as an "earpiece", is configured to convert an audio electrical signal into a sound signal, and there may be one or more receivers 170B. When a call is answered or a speech message is received through the electronic device 100, the receiver 170B may be put close to a human ear to listen to a speech.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyro sensor 180B may be configured to determine a motion gesture of the electronic device. In some embodiments, an angular velocity of the electronic device around three axes (axes x, y, and z) may be determined through the gyro sensor 180B. The gyro sensor 180B may be configured to implement image shooting stabilization during image shooting.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall effect sensor. The electronic device may detect opening and closing of a flip cover through the magnetic sensor 180D.

The acceleration sensor 180E may detect an acceleration of the electronic device in various directions (usually on three axes). When the electronic device is static, a magnitude and a direction of gravity may be detected.

The distance sensor 180F is configured to measure a distance. The electronic device may measure a distance by using infrared light or a laser.

The optical proximity sensor 180G may include, for example, a light-emitting diode (LED) and an optical detector, for example, a photodiode. The light-emitting diode may be an infrared light-emitting diode. The electronic device emits infrared light through the light-emitting diode. The electronic device detects infrared reflected light from a nearby object by using the photodiode. When sufficient reflected light is detected, it may be determined that there is an object near the electronic device. When insufficient reflected light is detected, the electronic device may determine that there is no object near the electronic device.

The ambient light sensor 180L is configured to sense ambient light brightness. The electronic device may adaptively adjust brightness of the display 194 based on the sensed ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of a touch event.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button. The electronic device may receive a button input, and generate a button signal input related to a user setting and function control of the electronic device. The motor 191 may generate a vibration prompt. The motor 191 may be configured to provide an incoming call vibration prompt and a touch vibration feedback. The indicator 192 may be an indicator light, and may be configured to indicate a charging status and a state of charge change, or may be configured to indicate a message, a missed call, a notification, and the like. The SIM card interface 195 is configured to connect to a SIM card. The SIM card may be inserted into the SIM card interface 195 or pulled out of the SIM card interface 195, to implement contact with or separation from the electronic device.

It may be understood that components shown in FIG. 1 do not constitute a specific limitation on the electronic device. The electronic device in embodiments of the present invention may include more or fewer components than those in FIG. 1. In addition, a combination/connection relationship between the components in FIG. 1 may also be adjusted and modified.

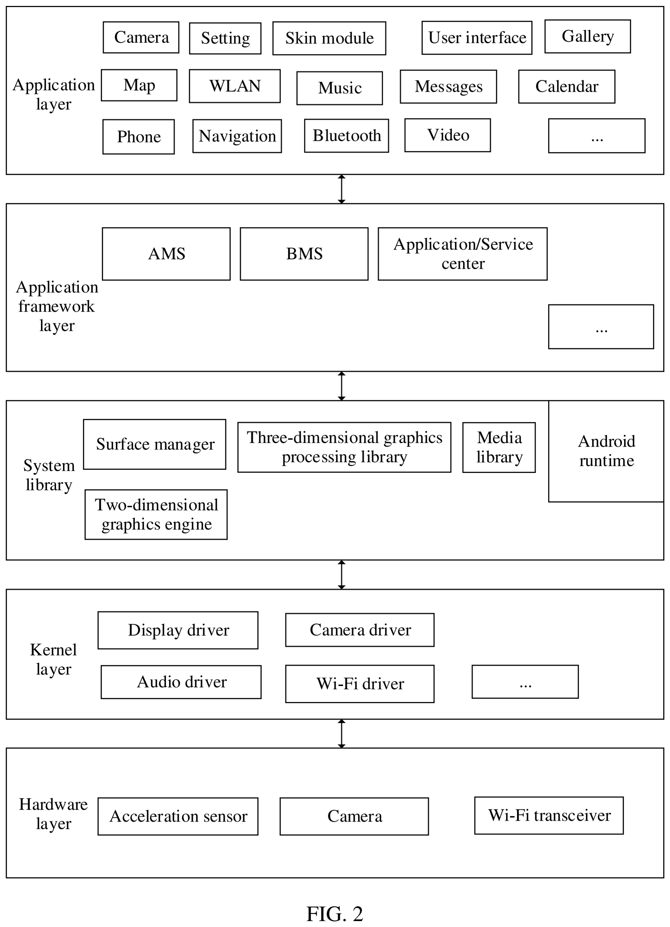

FIG. 2 is a diagram of a software structure of an electronic device according to an embodiment of this application.

As shown in FIG. 2, the software structure of the electronic device may be a layered structure, and the electronic device may be a terminal in a system. In a layered architecture, software is divided into several layers, and each layer has a clear role and task. The layers communicate with each other through a software interface. The layered architecture may be, for example, an event-driven architecture, a microkernel architecture, a microservice architecture, or a cloud architecture. In embodiments of this application, an Android^{®} system of the layered architecture is used as an example to describe the software structure of the electronic device. In some embodiments, the Android^{®} system is divided into five layers: an application layer, an application framework layer, an Android runtime (Android runtime) and system library, a kernel layer, and a hardware layer from top to bottom.

As shown in FIG. 2, the application layer may include a series of application packages. The application packages may include applications such as Camera, Gallery, Calendar, Phone, Map, Navigation, WLAN, Bluetooth, Music, and Video.

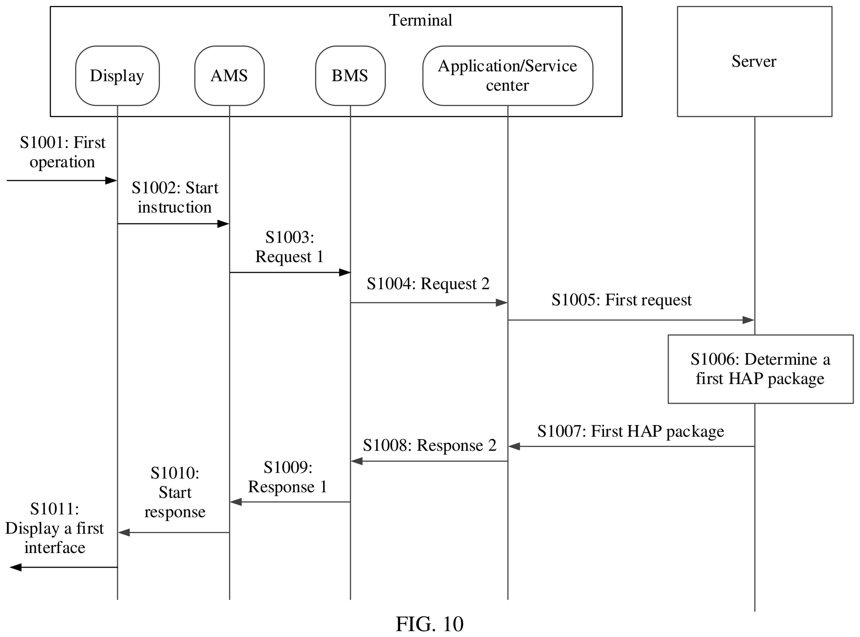

The application framework layer provides an application programming interface (application programming interface, API) and a programming framework for an application at the application layer. The application framework layer includes some predefined functions. As shown in FIG. 2, the application framework layer may include an ability manager service (Ability Manager Service, AMS), a bundle manager service (Bundle Manager Service, BMS), and an application/service center. The AMS is responsible for starting and exiting of an application (including an installation-free application) on the terminal, starting of a function/interface, and the like. The BMS is responsible for management of an HAP package of an application (including an installation-free application). For example, the BMS may record all HAP packages of each application (for example, a non-installation-free application). When an application is an installation-free application and is run for the first time, because the terminal has not downloaded an HAP package of the installation-free application, the BMS may notify the application/service center to download the HAP package of the installation-free application. The application/service center is configured to manage an application/service. For example, when an application is an installation-free application, the application/service center may download an HAP package of the application/service from a server. Specific actions of different modules are described in FIG. 10 below.

It may be understood that, although not shown in FIG. 2, the application framework layer may further include a content provider, a view system, a phone manager, a resource manager, a notification manager, and the like. The content provider is configured to: store and obtain data, and enable the data to be accessible to an application. The data may include a video, an image, an audio, calls that are made and answered, a browsing history and bookmarks, an address book, and the like. The view system includes visual controls such as a control for displaying a text and a control for displaying an image. The view system may be configured to construct an application. A display interface may include one or more views. For example, a display interface including a notification icon of Messages may include a view for displaying a text and a view for displaying an image. The phone manager is configured to provide a communication function of the electronic device, for example, management of a call status (including answering, declining, or the like). The resource manager provides various resources such as a localized character string, an icon, an image, a layout file, and a video file for an application. The notification manager enables an application to display notification information in a status bar, and may be configured to convey a notification message, which may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is prompted in the status bar, an alert tone is made, the electronic device vibrates, or the indicator blinks.

The Android runtime includes a kernel library and a virtual machine. The Android runtime is responsible for scheduling and management of the Android system. The kernel library includes two parts: a function that needs to be invoked in a Java language and a kernel library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL). The surface manager is configured to manage a display subsystem, and provide fusion of 2D and 3D layers for a plurality of applications. The media library supports playback and recording of a plurality of commonly used audio and video formats, static image files, and the like. The media library may support a plurality of audio and video encoding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a Wi-Fi driver, a display driver, a camera driver, an audio driver, a sensor driver, and the like.

The hardware layer includes one or more cameras, and may further include other hardware such as a sensor, a display, and a Wi-Fi transceiver. The Wi-Fi transceiver is configured to: receive and send Wi-Fi signals. The Wi-Fi transceiver may integrate both a receiver and a transmitter, or may include a separate receiver and a separate transmitter.

It may be understood that the software structure shown in FIG. 2 does not constitute a specific limitation on the software structure of the electronic device. A software structure of the electronic device in this embodiment the present invention may include more or fewer modules than those in FIG. 2, for example, more or fewer layers than those in FIG. 2, or a layer includes more or fewer modules than those in FIG. 2. In addition, a combination/connection relationship between the modules in FIG. 2 may also be adjusted and modified.

**The following uses an example in which the terminal is a mobile phone to describe, with reference to the accompanying drawings, the technical solutions provided in embodiments of this application.**

A server stores all application software packages (for example, HAP packages) of an installation-free application. These application software packages are used to implement functions/interfaces of the installation-free application. A same function/interface may be implemented by one or more HAP packages, and different functions/interfaces correspond to different HAP packages. For ease of understanding, the following uses an example in which one function/interface of the installation-free application corresponds to one HAP package, and different functions/interfaces correspond to different HAP packages for description. When the terminal needs to run the installation-free application, the terminal may download an HAP package of the installation-free application from the server. Because each HAP package of the installation-free application can be downloaded independently, a download manner includes the following content.

When receiving an operation used to start the installation-free application, the terminal downloads an HAP package 1 from the server. The HAP package 1 is used to start an interface (for example, a home page) of the installation-free application. After the HAP package 1 is successfully downloaded, the terminal starts the interface (for example, the home page) of the installation-free application based on the HAP package 1. A process in which the terminal downloads the HAP package 1 from the server includes: The terminal sends a request 1 to the server, where the request 1 is used to request to download the installation-free application; the server sends the HAP package 1 to the terminal after receiving the request 1; and the terminal receives the HAP package 1. When receiving an operation used to start another interface of the installation-free application, the terminal downloads an HAP package 2 from the server. The HAP package 2 is used to start the another interface. After the HAP package 2 is successfully downloaded, the terminal starts the another interface based on the HAP package 2. A process in which the terminal downloads the HAP package 2 from the server includes: The terminal sends a request 2 to the server, where the request 2 is used to request to download an HAP package of the another interface of the installation-free application; the server sends the HAP package 2 to the terminal after receiving the request 2; and the terminal receives the HAP package 2.

In the foregoing manner, each time the terminal starts a new interface, the terminal needs to send a request to the server, to request to download a corresponding HAP package, so that the new interface can be started. It should be understood that HAP package downloading requires specific duration. Therefore, from a perspective of user experience, each time a new interface is started, a user needs to wait for some time, and tap to use cannot be implemented in a real sense, resulting in poor user experience.

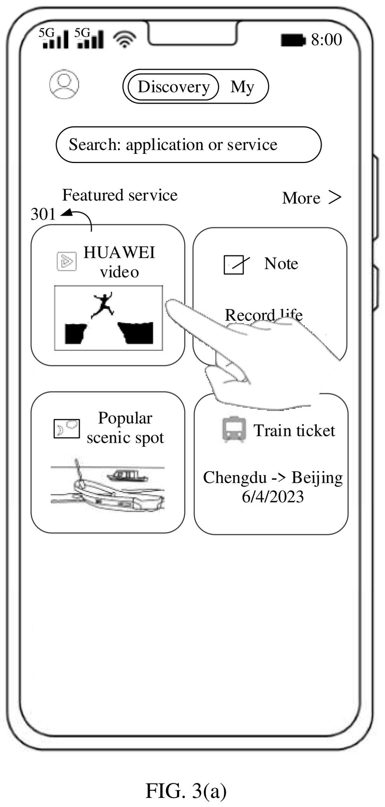

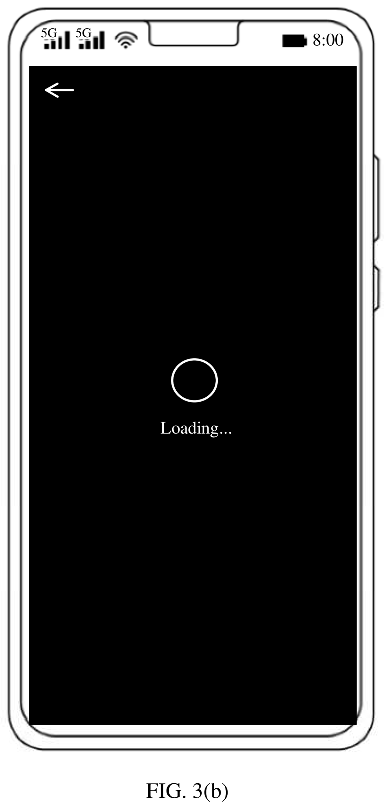

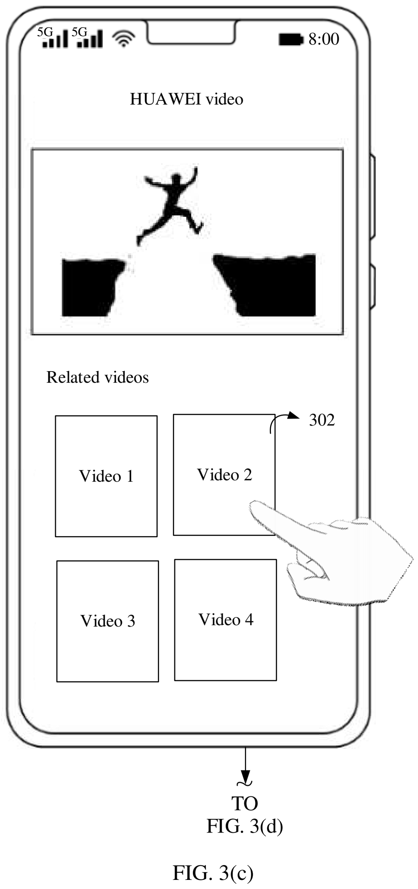

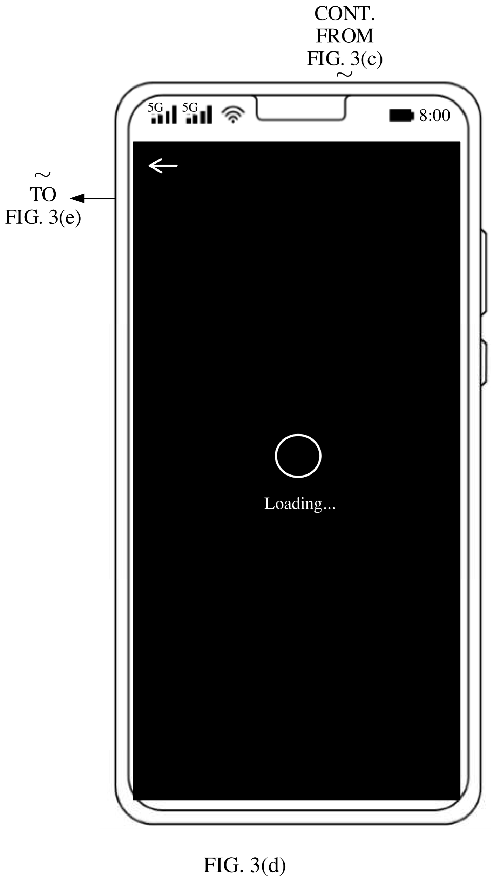

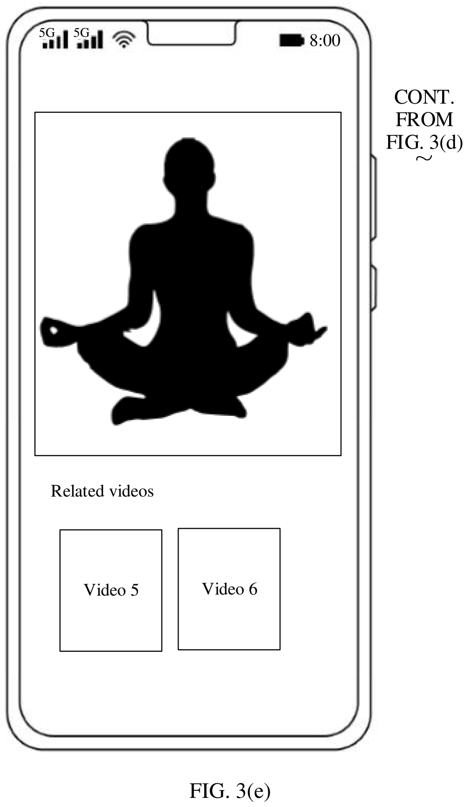

For example, as shown in FIG. 3(a), the mobile phone displays an interface (for example, a leftmost screen of the mobile phone), and the interface includes icons or service widgets of one or more installation-free applications. When receiving an operation on a service widget 301 of HUAWEI video, the mobile phone downloads an HAP package 1 of HUAWEI video from the server. The HAP package 1 is used to start an interface (for example, a home page) of HUAWEI video. When the HAP package 1 is not successfully downloaded yet, the mobile phone displays an interface shown in FIG. 3(b). Prompt information is displayed on the interface, to prompt the user to wait. After the HAP package 1 is successfully downloaded, the mobile phone displays an interface shown in FIG. 3(c). The interface is generated based on the HAP package 1. For example, the interface is the home page of HUAWEI video. In this process, the user needs to wait for a period of time, namely, display duration of the interface shown in FIG. 3(b). Still as shown in FIG. 3(c), when receiving an operation on a video 302, the mobile phone downloads an HAP package 2 corresponding to the video 302 from the server. The HAP package 2 is used to open the video 302. When the HAP package 2 is not successfully downloaded yet, the mobile phone displays an interface shown in FIG. 3(d). Prompt information is displayed on the interface, to prompt the user to wait. After the HAP package 2 is successfully downloaded, an interface shown in FIG. 3(e) is displayed. The interface is generated based on the HAP package 2 and is used to play the video 302. Therefore, in FIG. 3(a) to FIG. 3(e), each time the user starts a new interface, the user needs to wait for a period of time because the mobile phone needs to first download an HAP package corresponding to the interface and then the interface can be started. In this manner, tap to use cannot be implemented in a real sense.

To resolve the foregoing problem, this application provides a download method for an installation-free application. The method is applicable to a system including a terminal and a server. Specifically, the server receives a first request sent by the terminal. The first request is used to request to download a first application, and the first application is an installation-free application. The server sends a first HAP package to the terminal. The first HAP package is used to implement at least one function or interface of the first application. The first HAP package includes a configuration file, the configuration file includes indication information, and the indication information indicates the terminal to download a second HAP package. In short, after downloading the first HAP package, the terminal downloads the second HAP package based on the indication information in the configuration file in the first HAP package. In other words, the terminal may download the second HAP in advance. It is assumed that the second HAP is used to implement another function/interface of the first application. When the terminal receives an operation used to start the another function/interface, because the second HAP package has been downloaded, the another function/interface can be quickly started without downloading the second HAP package again, so that tap to use is implemented.

The second HAP package and the first HAP package may correspond to a same application or different applications. For ease of understanding, the following describes two application scenarios. In Application scenario 1, for example, the second HAP package and the first HAP package correspond to the same application. In Application scenario 2, for example, the second HAP package and the first HAP package correspond to different applications.

### Application scenario 1:

The first HAP package and the second HAP package correspond to the same application. For example, both the first HAP package and the second HAP package correspond to the first application, and the first application is an installation-free application. The first HAP package and the second HAP package correspond to different functions/interfaces of the first application. For example, the first HAP package corresponds to a first function/interface of the first application, and the second HAP package corresponds to a second function/interface of the first application.

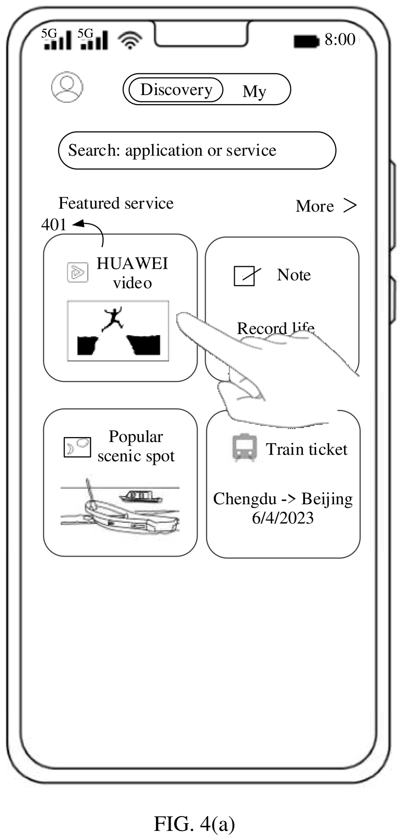

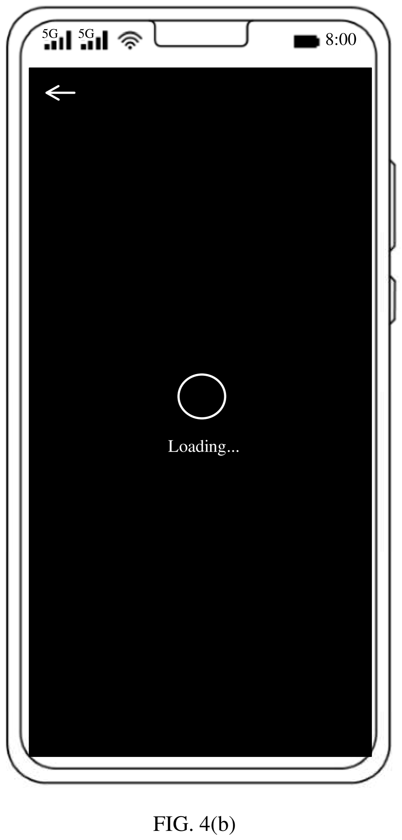

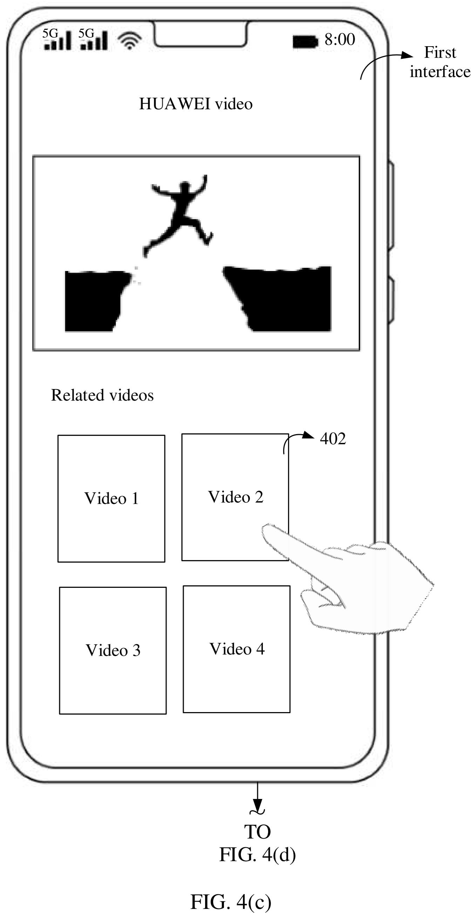

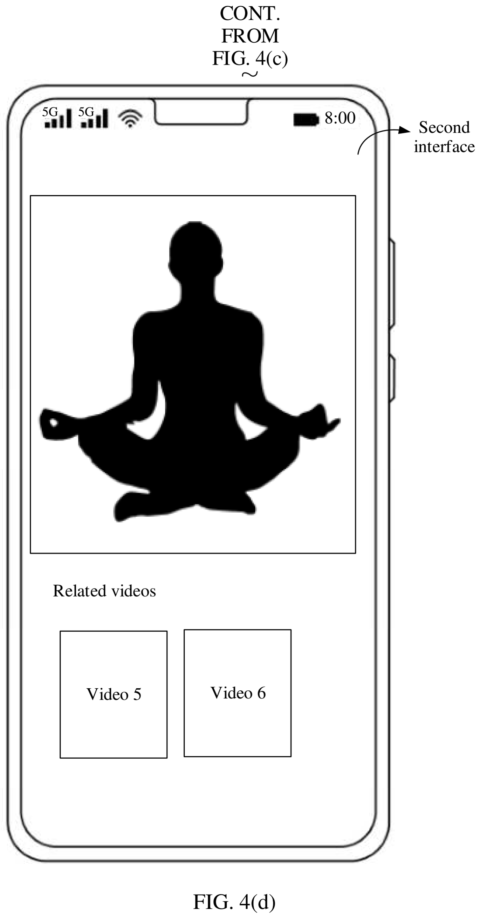

For example, as shown in FIG. 4(a), the mobile phone displays an interface. For example, the interface is the leftmost screen of the mobile phone. Certainly, the interface may alternatively be another interface, provided that an icon or a service widget of the installation-free application is included. For example, the interface may alternatively be a home screen, a control center interface, or the like of the mobile phone; or may be an interface of an application on the mobile phone, for example, an interface (for example, a home page) of an application store, an interface of a quick application center, an interface of a shopping application, or an interface (for example, a chat interface) of a communication application. In FIG. 4(a), when receiving an operation on a service widget 401 of HUAWEI video, the mobile phone downloads the first HAP package from the server. When the first HAP package is not successfully downloaded yet, the mobile phone displays an interface shown in FIG. 4(b). Prompt information is displayed on the interface, to prompt the user to wait. After the first HAP package is successfully downloaded, the mobile phone displays a first interface shown in FIG. 4(c). The first interface is generated based on the first HAP package, for example, the home page of HUAWEI video. The first HAP package includes a configuration file, and the configuration file includes indication information, to indicate the terminal to download the second HAP package. Therefore, the mobile phone further downloads the second HAP package in the background. The second HAP package and the first HAP package correspond to different functions/interfaces of HUAWEI video. For example, still as shown in FIG. 4(c), the second HAP package is used to generate an interface of a video 402. In this way, when receiving an operation on the video 402, the mobile phone displays a second interface shown in FIG. 4(d). The second interface is generated based on the second HAP package, and is used to play the video 402. It should be noted that, because the mobile phone has downloaded the second HAP package in advance, the second interface in FIG. 4(d) can be quickly started on the first interface in FIG. 4(c) without a need to wait for long time, so that tap to use is implemented.

FIG. 4(a) to FIG. 4(d) are compared with FIG. 3(a) to FIG. 3(e). It is assumed that in FIG. 3(a) to FIG. 3(e), first duration needs to be waited for switching from the interface in FIG. 3(c) to the interface in FIG. 3(e). It is further assumed that in FIG. 4(a) to FIG. 4(d), second duration needs to be waited for switching from the first interface in FIG. 4(c) to the second interface in FIG. 4(d). The second duration is less than the first duration. For example, the first duration is 2 seconds or 3 seconds, and the second duration is 0.1 second, 0.2 second, 0.5 second, or 1 second. Therefore, in this application scenario, different functions/interfaces of the same application can be quickly started, that is, tap to use of different functions/interfaces of the same application can be implemented.

### Application scenario 2

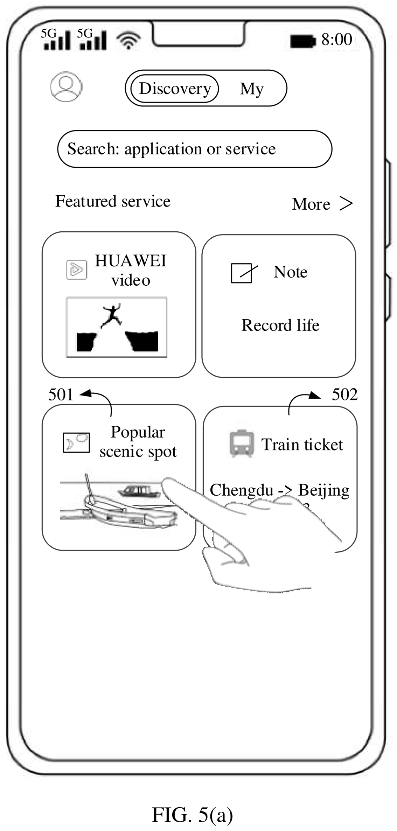

The first HAP package and the second HAP package correspond to different applications. For example, the first HAP package corresponds to the first application, and the second HAP package corresponds to a second application. For example, as shown in FIG. 5(a) to FIG. 5(e), the first application is a popular scenic spot application corresponding to a service widget 501 in FIG. 5(a), and the second application is a train ticket application corresponding to a service widget 502 in FIG. 5(a).

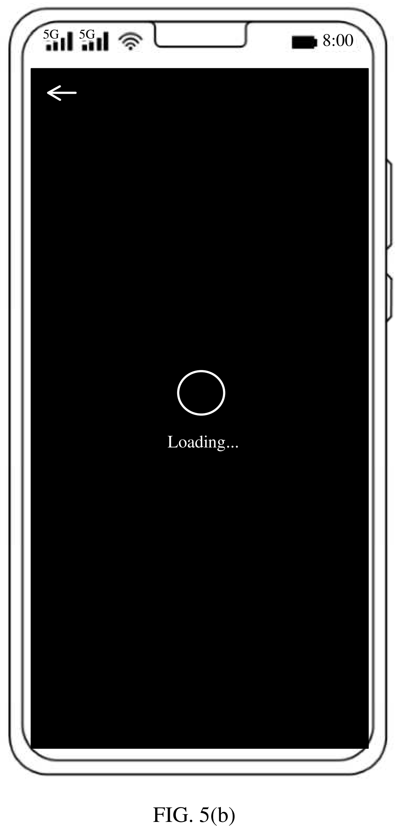

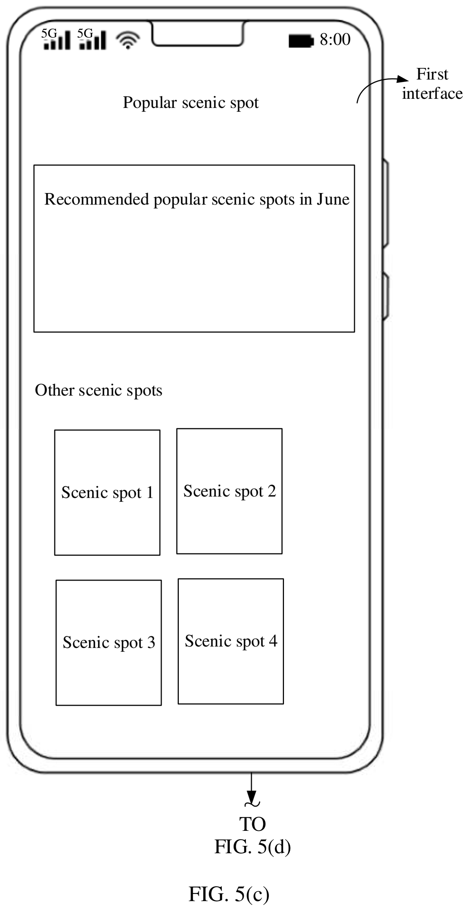

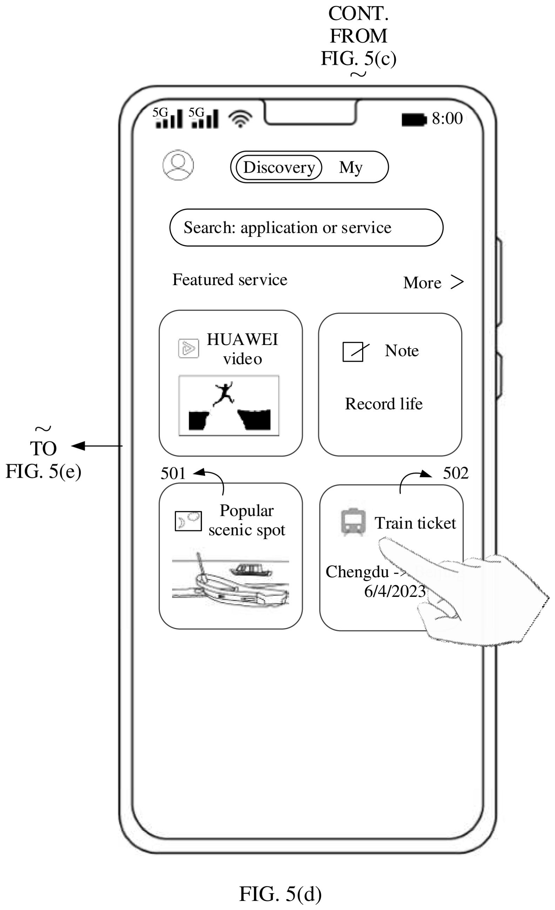

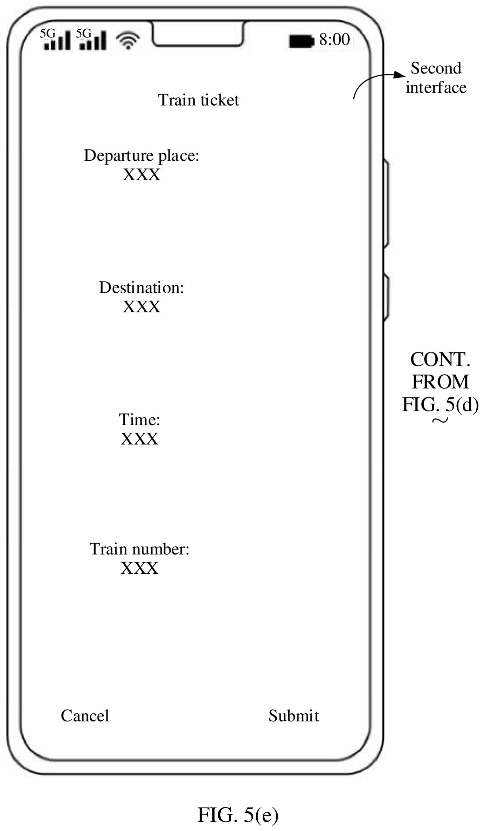

Still as shown in FIG. 5(a), the mobile phone displays an interface (for example, the leftmost screen of the mobile phone). The interface includes an icon or a service widget of the installation-free application. When receiving an operation on the service widget 501, the mobile phone downloads a first HAP package from the server. The first HAP package is used to start a function/interface of the first application, namely, the popular scenic spot application. When the first HAP package is not successfully downloaded yet, the mobile phone displays an interface shown in FIG. 5(b). Prompt information is displayed on the interface, to prompt the user to wait. After the first HAP package is successfully downloaded, the mobile phone displays a first interface shown in FIG. 5(c). The first interface is generated based on the first HAP package, for example, a home page of the popular scenic spot application. The first HAP package includes a configuration file, and the configuration file includes indication information, to indicate the terminal to download the second HAP package. Therefore, the terminal further downloads the second HAP package. The second HAP package corresponds to the second application, namely, the train ticket application. Still as shown in FIG. 5(c), when receiving a return operation, the mobile phone returns to the leftmost screen of the mobile phone, as shown in FIG. 5(d). In FIG. 5(d), when receiving an operation on an icon of the service widget 502, the mobile phone displays a second interface shown in FIG. 5(e). The second interface is generated based on the second HAP package. For example, the second interface is a home page of the train ticket application. Because the mobile phone has downloaded the second HAP package of the second application (namely, the train ticket application) in advance, when the second application (namely, the train ticket application) is started in FIG. 5(d), the second application can be quickly started without a need to wait for long time. It can be learned from FIG. 5(a) to FIG. 5(e) that, when the terminal switches from the first application (for example, the popular scenic spot application) to the second application (for example, the train ticket application), the terminal can quickly switch to the second application because the second HAP package of the second application is downloaded in advance.

Application scenario 1 is compared with Application scenario 2. In Application scenario 1, the second HAP and the first HAP package correspond to the same application. Therefore, if the terminal downloads the second HAP package in advance, the terminal can quickly start a function/interface corresponding to the second HAP package in the application, to quickly start the function/interface of the same application. In Application scenario 2, the second HAP and the first HAP package correspond to different applications. Therefore, if the terminal downloads the second HAP package of the second application in advance, the terminal can quickly start the second application. For example, when the terminal switches from the first application to the second application, quickly switching can be implemented, that is, quickly switching between different applications is implemented.

In conclusion, in this application, after downloading the first HAP package, the terminal further downloads the second HAP package based on the indication information in the configuration file in the first HAP package. Because the terminal downloads the second HAP in advance, the terminal can quickly start the function/interface corresponding to the second HAP package, to implement tap to use.

The following describes an implementation principle of the download method for the installation-free application provided in this application with reference to the accompanying drawings.

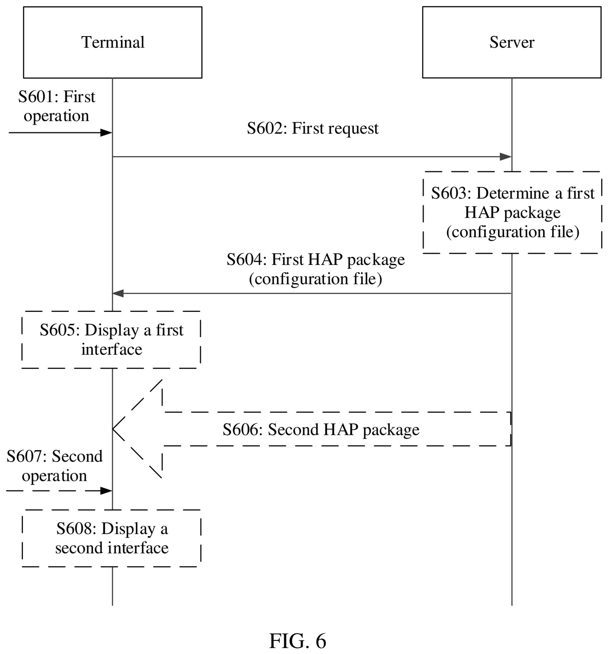

FIG. 6 is a schematic flowchart of a download method for an installation-free application according to an embodiment of this application. The method is applicable to a system. The system includes a terminal and a server. For descriptions of the terminal and the server, refer to the foregoing descriptions. The method is applicable to the foregoing Application scenario 1 and Application scenario 2. As shown in FIG. 6, the procedure includes the following steps.

S601: The terminal receives a first operation, where the first operation is used to start a first application on the terminal, and the first application is an installation-free application.

For descriptions of the installation-free application, refer to the foregoing term explanation part. Details are not described herein again. FIG. 4(a) to FIG. 4(d) are used as an example. The first operation may be, for example, an operation (for example, a tap operation) on the service widget 401 in FIG. 4(a). FIG. 5(a) to FIG. 5(e) are used as an example. The first operation may be an operation (for example, a tap operation) on the service widget 501 in FIG. 5(a).

S602: The terminal sends a first request to the server, where the first request is used to request to download the first application.

For example, the first request may include an application package name of the first application. The server receives the first request, obtains the application package name of the first application by parsing the first request, and determines the first application based on the application package name.

S603: The server determines a first HAP package, where the first HAP package is used to implement at least one function/interface of the first application, the first HAP package includes a configuration file, the configuration file includes indication information, the indication information indicates a second HAP package, and the second HAP package is used to implement at least one function or interface of a second application.

A possible implementation of determining the first HAP package by the server is as follows: The server stores all HAP packages of each of N applications, where N is a positive integer. After receiving the first request, the server determines the first application in the N applications based on the application package name of the first application in the first request, and then determines all HAP packages of the first application. The first HAP package is one or more HAP packages in all the HAP packages of the first application. For example, the first HAP package may be an HAP package corresponding to a home page of the first application. In other words, the first HAP package is used to start the home page of the first application. To be specific, after receiving the first request, the server sends, to the terminal, the first HAP package corresponding to the home page of the first application, so that the terminal starts the home page of the first application.

The first HAP package includes the configuration file. Optionally, the configuration file may be, for example, a module.json file. The configuration file includes the indication information. A form of the indication information is described below. The indication information indicates the terminal to download the second HAP package. The second HAP package may include one or more HAP packages, and the second HAP package and the first HAP package may correspond to a same application or different applications. Therefore, the following describes two cases.

Case 1: The second HAP package and the first HAP package correspond to the same application. For example, both the second HAP package and the first HAP package correspond to the first application. In this case, the second HAP package and the first HAP package are used to implement different functions/interfaces in the first application. For example, the first HAP package is used to implement a first function/first interface of the first application, and the second HAP is used to implement a second function/second interface of the first application. This case may correspond to the foregoing Application scenario 1, that is, FIG. 4(a) to FIG. 4(d). For example, the first interface in FIG. 4(c) is generated based on the first HAP package, and the second interface in FIG. 4(d) is generated based on the second HAP package. Because the terminal downloads the second HAP package in advance, the second interface in FIG. 4(d) can be quickly started on the first interface in FIG. 4(c), to quickly start different functions/interfaces of the same application.

Optionally, it is assumed that the first HAP package is used to implement the first interface of the first application, and the second HAP is used to implement the second interface of the first application. The second interface is associated with the first interface. For example, the second interface includes first n interfaces and last n interfaces of the first interface, or an interface that is started on the first interface a quantity of times greater than a preset quantity of times, where n is a positive integer.

Case 2: The second HAP package and the first HAP package correspond to different applications. For example, the first HAP package corresponds to the first application, and the second HAP package corresponds to the second application. The first HAP package is used to implement a function/interface of the first application, and the second HAP is used to implement a function/interface of the second application. This case may correspond to the foregoing Application scenario 2, that is, FIG. 5(a) to FIG. 5(e). For example, the first interface in FIG. 5(c) is generated based on the first HAP package, and the first interface is an interface of the first application (for example, a popular scenic spot application); and the second interface in FIG. 5(e) is generated based on the second HAP package, and the second interface is an interface of the second application (for example, a train ticket application). Because the terminal downloads the second HAP in advance, the second interface in FIG. 5(e) can be quickly started.

Optionally, in Case 2, the second application is associated with the first application, and the association relationship includes at least one of the following relationships.
(1) The second application and the first application belong to a same developer.

For example, the first application is Toutiao, the second application is TikTok, and the first application and the second application belong to a same developer. For example, the first HAP package of Toutiao includes the configuration file, the configuration file includes the indication information, and the indication information indicates the terminal to download the second HAP package. The second HAP package corresponds to TikTok. In this case, after downloading the first HAP package of Toutiao, the terminal downloads the second HAP package of TikTok based on the indication information in the configuration file in the first HAP package. Because the terminal has downloaded the second HAP package of TikTok in advance, when the terminal receives an operation used to start TikTok, the terminal can quickly start TikTok; or when the terminal receives an operation used to switch from Toutiao to TikTok, the terminal can quickly switch to TikTok.

(2) The second application and the first application are pre-configured associated applications.

In a possible implementation, before the first application and the second application are released to an application market, developers of the first application and the second application have already negotiated that the first application and the second application are associated applications. For example, the first HAP package of the first application includes the configuration file, the configuration file includes the indication information, and the indication information indicates the second HAP package. The second HAP package corresponds to the second application. After the first application and the second application are released to the application market, if the terminal downloads the first HAP package of the first application, the terminal downloads the second HAP package of the second application based on the indication information in the configuration file in the first HAP package.

In this manner, the first application and the second application may not belong to a same developer, provided that a developer of the first application and a developer of the second application negotiate that the first application and the second application are associated applications.

(3) The second application and the first application are type-related applications.

That the second application and the first application are type-related includes: A type of the second application is the same as a type of the first application, and/or the second application is another application that may be used in a process of using the first application.

For example, the type of the first application is the same as the type of the second application. It is assumed that both the first application and the second application are short video applications. For example, the first application is TikTok, and the second application is Kuaishou. In other words, the first HAP package of TikTok includes the configuration file, and the configuration file includes the indication information, to indicate the terminal to download the second HAP package. The second HAP package corresponds to Kuaishou. In other words, after downloading the first HAP package of the installation-free application of a type from the server, the terminal downloads the second HAP package of another installation-free application of the same type based on the indication information in the configuration file in the first HAP package. This manner helps promote the installation-free application (for example, the second application). It may be understood that when a user wants to start the first application of a type on the terminal, it indicates that the user is interested in an application of the type. Therefore, in this manner, the server may recommend the second application of the same type to the terminal. If the user is interested in the second application and further wants to start the second application, the second application can be quickly started because the HAP package of the second application has been downloaded in advance, so that user experience is good.

For example, the second application is another application that may need to be used in a process of using the first application. FIG. 5(a) to FIG. 5(e) are used as an example. The first application is, for example, the popular scenic spot application in FIG. 5(a), and the second application is the train ticket application in FIG. 5(a). It should be understood that after starting the popular scenic spot application, if the user finds an interested scenic spot, the user may purchase a train ticket to go to the scenic spot. Therefore, the train ticket application is an application that needs to be used in a process of using the popular scenic spot application. For another example, the first application is a shopping application (for example, Taobao), and the second application is a quick application (for example, Cainiao Station). It should be understood that after starting the shopping application to purchase an item, the user needs to receive a package. Therefore, an express delivery application is an application that needs to be used in a process of using the shopping application. For another example, the first application is a movie ticket-related application, and the second application is a catering-related application. It should be understood that generally, after watching a movie, a consumer may search for a restaurant for dining, and may search for the restaurant on a restaurant-related application. Therefore, the restaurant-related application is an application that needs to be used in a process of using the movie ticket-related application. For example, the first application is the popular scenic spot application, and the second application is the train ticket application. In other words, the first HAP package of the popular scenic spot application includes the configuration file, and the configuration file includes the indication information, to indicate the terminal to download the second HAP package. The second HAP package corresponds to the train ticket application. In other words, after downloading the first HAP package of the popular scenic spot application from the server, the terminal downloads the second HAP package of the train ticket application based on the indication information in the configuration file in the first HAP package. In this way, when the terminal is to start an interface of the train ticket application, the interface can be quickly started, so that user experience is good.

(4) A quantity of times of switching between the second application and the first application is greater than a preset quantity of times.

In a possible implementation, the server may collect statistics on a quantity of times of switching between different applications. For example, the server finds, through statistics, that a quantity of times of switching between a short video application (for example, TikTok) and a shopping application (for example, Taobao) is greater than the preset quantity of times. In this case, the server determines that the first application is the short video application, and the second application is the shopping application; or the first application is the shopping application, and the second application is the short video application.

The foregoing is several examples of the association relationship between the second application and the first application. It may be understood that the second application and the first application may alternatively have other relationships. These are not listed one by one in this application.

Optionally, the indication information may be one or more fields in the configuration file, for example, a preload (Preload) field. It should be noted that currently, the configuration file is included in the HAP package of the application, but the configuration file does not include the indication information indicating the terminal to download another HAP package. In a possible implementation of this application, before the first application is released, a developer writes the indication information into the configuration file in the first HAP package. In another possible implementation, the indication information is not written into the configuration file when the first application is released, and the developer adds the indication information to the configuration file after the first application is released. This is not limited in embodiments of this application. For example, an implementation of the indication information includes at least one of the following implementations.

Implementation A: The indication information includes a first list, and the first list includes a package name of an HAP package. When the first list includes a package name of the second HAP package, the terminal is indicated to download the second HAP package. For example, the first list is as follows:

### Preload:

| | |
|---|---|
| HAP Name: | HAP 1 |
| HAP Name: | HAP 2 |
| HAP Name: | HAP 3 |

In other words, the second HAP package includes three HAP packages, and package names of the three HAP packages are respectively HAP 1, HAP 2, and HAP 3. The terminal downloads the three HAP packages based on the indication information.

Implementation B: The indication information includes a first list, and the first list includes a package name of an HAP package and a package name of an application. For example, when the first list includes a package name of the second HAP package and a package name of the second application, the terminal is indicated to download the second HAP package, where the second HAP package corresponds to the second application. For example, the first list is as follows:

### Preload:

| | |
|---|---|
| APP Name: | APP 1 |
| HAP Name: | HAP 1 |
| HAP Name: | HAP 2 |
| HAP Name: | HAP 3 |

Implementation B is different from Implementation A. In Implementation A, the indication information only indicates the terminal to download the second HAP package, and does not indicate an application corresponding to the second HAP. In Implementation B, the indication information indicates the terminal to download the second HAP package, and indicates that the application corresponding to the second HAP is the second application.

Implementation C: The indication information includes a first list, the first list includes a package name of an HAP package and a primary-secondary tag, and the primary-secondary tag indicates a primary-secondary relationship between the HAP package (for example, the second HAP package) indicated in the first list and the first HAP package. For example, when the first list includes a package name of the second HAP package and a primary-secondary tag 1, the terminal is indicated to download the second HAP package. The primary-secondary tag 1 indicates that the second HAP package is a primary package of the first HAP package. In other words, when the second HAP package is the primary package of the first HAP package, the terminal is indicated to download the second HAP package. For another example, when the first list includes a package name of the second HAP package and a primary-secondary tag 2, the terminal does not need to download the second HAP package. The primary-secondary tag 2 indicates that the second HAP package is a secondary package of the first HAP package. In other words, when the second HAP package is the secondary package of the first HAP package, the terminal does not need to download the second HAP package. For another example, when the first list includes a package name of the second HAP package and a primary-secondary tag 3, the terminal is indicated to download the second HAP package. The primary-secondary tag 3 indicates that the second HAP package is a primary package or a secondary package of the first HAP package. In other words, regardless of the primary-secondary relationship between the second HAP package and the first HAP package, the terminal is indicated to download the second HAP package.

For example, when the second HAP package is the primary package of the first HAP package, the terminal is indicated to download the second HAP package. The first list is, for example, as follows:

### Preload:

| | |
|---|---|
| HAP Name: | HAP 1 primary |
| HAP Name: | HAP 2 secondary |
| HAP Name: | HAP 3 primary |

Therefore, the terminal determines, based on the first list, to download an HAP package of which package name is HAP 1 and an HAP package of which package name is HAP 3.

In Implementation C, the primary-secondary relationship between the second HAP package and the first HAP package may be preset. For example, a developer 2 of the second HAP package and a developer 1 of the first HAP agree on the primary-secondary relationship between the second HAP package and the first HAP package in advance, and write the indication information into the configuration file in the first HAP package, to indicate the primary-secondary relationship between the second HAP package and the first HAP package. For example, to promote the HAP package (or the application corresponding to the HAP package) of the developer 2, the developer 2 of the second HAP package reaches an agreement with the developer 1 of the popular first HAP package (or the application corresponding to the HAP package), and sets the second HAP package as the primary package of the first HAP package. In this way, when downloading the first HAP package, the terminal further downloads the second HAP package based on the indication information, to implement a promotion purpose of the developer 2.

Implementation D: The indication information includes a first list, the first list includes a package name of an HAP package, a package name of an application, and a primary-secondary tag, and the primary-secondary tag indicates a primary-secondary relationship between the second application corresponding to the HAP package (for example, the second HAP package) indicated in the first list and the first application corresponding to the first HAP package. For example, when the first list includes a package name of the second HAP package, a package name of the second application, and a primary-secondary tag 1, the terminal is indicated to download the second HAP package. The primary-secondary tag 1 indicates that the second application corresponding to the second HAP package is a primary application of the first application corresponding to the first HAP package. In other words, when the second application is the primary application of the first application, the terminal is indicated to download the second HAP package. For another example, when the first list includes a package name of the second HAP package, a package name of the second application, and a primary-secondary tag 2, the terminal does not need to download the second HAP package. The primary-secondary tag 2 indicates that the second application corresponding to the second HAP package is a secondary application of the first application corresponding to the first HAP package. In other words, when the second application is the secondary application of the first application, the terminal does not need to download the second HAP package. For another example, when the first list includes a package name of the second HAP package, a package name of the second application, and a primary-secondary tag 3, the terminal is indicated to download the second HAP package. The primary-secondary tag 3 indicates that the second application corresponding to the second HAP package is a primary application or a secondary application of the first application corresponding to the first HAP package. In other words, regardless of the primary-secondary relationship between the second application and the first application, the terminal is indicated to download the second HAP package.

For example, when the second application is the primary application of the first application, the terminal is indicated to download the second HAP package. The first list is, for example, as follows:

### Preload:

```
APP Name: APP 1 primary
                HAP Name: HAP 1
              APP Name: APP 2 secondary
           HAP Name: HAP 2
                HAP Name: HAP 3
```

Therefore, the terminal determines, based on the first list, that an application of which package name is APP 1 is the primary application of the first application. Therefore, the terminal downloads an HAP package having the corresponding package name HAP 1. Because an application of which package name is APP 2 is the secondary application of the first application, the terminal does not need to download an HAP package of which package name is HAP 2 and an HAP package of which package name is HAP 3.

In Implementation D, the primary-secondary relationship between the second application and the first application may be preset. For example, the developer 2 of the second application and the developer 1 of the first application agree on the primary-secondary relationship between the second application and the first application in advance, and write the indication information into the configuration file in the first HAP package of the first application, to indicate a subordinate relationship between the second application and the first application. For example, to promote an application of the developer 2, the developer 2 of the second application reaches an agreement with the developer 1 of the popular first application, and sets the second application as the primary application of the first application. In this way, when downloading the first HAP package of the first application, the terminal further downloads the second HAP package of the second application based on the indication information, to implement a promotion purpose of the developer 2.

S604: The server sends the first HAP package to the terminal.

S605: The terminal displays the first interface, where the first interface is generated based on the first HAP package.

For example, the first HAP package is used to start the home page of the first application. Therefore, the first interface is the home page of the first application. FIG. 4(a) to FIG. 4(d) are used as an example. The first interface is the interface shown in FIG. 4(c). FIG. 5(a) to FIG. 5(e) are used as an example. The first interface is the interface shown in FIG. 5(c).

S606: The terminal downloads the second HAP package from the server.

Optionally, when the indication information indicates a plurality of HAP packages (the plurality of HAP packages include the second HAP package), a second request is used to request to download the plurality of HAP packages. In other words, the terminal downloads all HAP packages indicated in the indication information. For example, the indication information includes the first list, and all HAP packages corresponding to package names of all HAP packages included in the first list are downloaded.

Optionally, S606 may be that the terminal downloads all HAP packages of the second application from the server, where the second HAP package is included. In other words, the first HAP package includes the configuration file, the configuration file includes the indication information, and the indication information indicates only one HAP package (the second HAP package) of the second application. The terminal downloads all application software packages of the second application based on the indication information. Because the indication information indicates only one HAP package of the second application, and does not need to indicate all the HAP packages, an amount of information is small, and fewer transmission resources are consumed. In addition, the terminal downloads all the HAP packages of the second application based on prompt information. When the terminal needs to start any function or interface of the second application, the terminal can quickly start the function or the interface.

Optionally, before S606, the terminal may further perform step A or step B. Step A: The terminal outputs first prompt information, to inform the user whether to download the second HAP package. If the terminal receives a download confirmation instruction, the terminal downloads the second HAP package. Otherwise, the terminal refuses to download the second HAP package. Step B: The terminal outputs second prompt information, where the second prompt information indicates whether to download the second application, and the second application is the application corresponding to the second HAP package; and if a download confirmation instruction is received, downloads the second HAP package; otherwise, refuses to download the second HAP package. For example, if the user of the terminal expects to save memory, the user may refuse to download the second HAP package. If the user is interested in the second application, the user may choose to download the second HAP package.

Optionally, before S606, the terminal may further perform the following step: Determine whether a device state of the terminal meets a condition; and if the device state of the terminal meets the condition, download the second HAP package; otherwise, refuse to download the second HAP package. That the device state of the terminal meets the condition includes at least one of the following: a state of charge of the device is greater than a preset threshold, remaining memory is greater than preset memory, or a current load of the processor is less than a preset load.

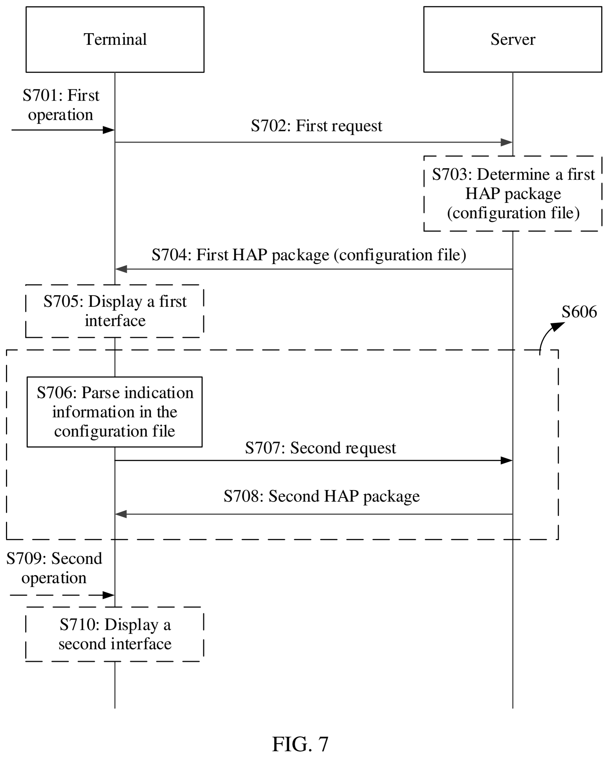

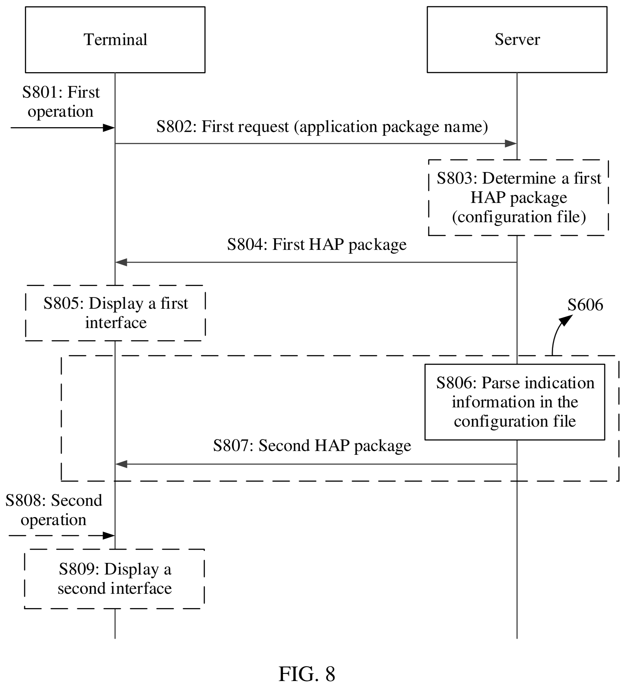

Optionally, S606 has a plurality of implementations, which are described in FIG. 7 and FIG. 8 below. Optionally, in FIG. 6, S606 may be performed before or after S605, or may be performed synchronously with S605.

Optionally, after downloading the second HAP package, the terminal may delete the second HAP package when determining that at least one of the following conditions is met. For example, the condition includes: A function/interface of the second HAP package is not used within preset duration, and current memory is less than a threshold.

S607: The terminal receives a second operation, where the second operation is used to start the second interface. The second interface is generated based on the second HAP package.

S608: The terminal displays the second interface.

As described above, the first HAP package and the second HAP package may correspond to the same application or different applications. Therefore, the first interface and the second interface may be different interfaces of the same application, or may be interfaces of different applications. For example, when the first HAP package and the second HAP package correspond to the same application, the first interface and the second interface are different interfaces of the same application. When the first HAP package and the second HAP package correspond to different applications, the first interface and the second interface are interfaces of different applications. It should be understood that because the second HAP package has been downloaded in advance, the terminal can start the second interface without a need to wait for long time, so that user experience is good.

Optionally, still refer to FIG. 6. It is assumed that a receive moment of the second operation is a first moment, a start moment of the second interface is a second moment, and the first moment is earlier than the second moment. A time interval between the first moment and the second moment is less than a threshold. The threshold is, for example, 0.1 second, 0.3 second, 0.5 second, 1 second, or 2 seconds. In other words, when receiving the second operation, the terminal can quickly start the second interface. For example, the threshold may include a time interval between a third moment and a fourth moment. The third moment is a receive moment of the first operation, the fourth moment is a start moment of the first interface, and the third moment is earlier than the fourth moment. In other words, the time interval between the first moment and the second moment is less than the time interval between the third moment and the fourth moment. From a perspective of user experience, compared with duration that needs to be waited for starting the first interface, duration that needs to be waited for starting the second interface is short, because the terminal has downloaded, in advance, the second HAP package used to start the second interface, to implement tap to use.

Optionally, in FIG. 6, at least one of step S605 to step S608 may be performed or may not be performed. Therefore, S605 to S608 in FIG. 6 are represented by using dashed lines. For example, at least one of the following cases is included:
1. S605 is not performed. For example, after receiving the first HAP package, the terminal runs, in the background, a function or an interface corresponding to the first HAP package. For example, the first application is a positioning application. After downloading the first HAP package of the first application, the terminal starts GPS in the background for positioning, and may not display the interface of the first application in the foreground.
2. S606 is not performed. In a possible case, the terminal determines, based on the indication information in the configuration file in the first HAP package, to further download the second HAP package. In this case, the terminal may output the first prompt information to indicate whether to download the second HAP package. If the terminal receives the download confirmation instruction, the terminal downloads the second HAP package. Otherwise, the terminal does not download the second HAP package, that is, the terminal does not perform S606. In another possible case, the indication information in the configuration file includes a list. For descriptions of the list, refer to the foregoing descriptions. When the list is empty, the terminal does not perform S606.
3. S607 and S608 are not performed. In short, after starting the first interface, if the terminal does not receive the second operation, the terminal does not need to perform S607 and S608.

FIG. 7 is another schematic flowchart of a download method for an installation-free application according to an embodiment of this application. FIG. 7 may be understood as a refinement of FIG. 6. For example, S706 to S708 in FIG. 7 are used as a refinement of S606 in FIG. 6. As shown in FIG. 7, the procedure includes the following steps.

S701: A terminal receives a first operation, where the first operation is used to start a first application on the terminal, and the first application is an installation-free application.

S702: The terminal sends a first request to a server, where the first request is used to request to download the first application.

S703: The server determines a first HAP package. The first HAP package is used to implement at least one function or interface of the first application. The first HAP package includes a configuration file, the configuration file includes indication information, and the indication information indicates the terminal to download a second HAP package. The second HAP package is used to implement at least one function or interface of a second application.

S704: The server sends the first HAP package to the terminal.

S705: The terminal displays a first interface, where the first interface is generated based on the first HAP package.

Implementation principles of S701 to S705 are the same as implementation principles of S601 to S605 in FIG. 6, and details are not described again.

S706: The terminal parses the indication information in the configuration file.

For example, S706 includes: The terminal parses the configuration file, to obtain the indication information in the configuration file, and determines the second HAP package based on the indication information. For the configuration file and the indication information, refer to the foregoing descriptions. Details are not described again.

S707: The terminal sends a second request to the server, where the second request is used to request to download the second HAP package.

Optionally, the second request may include a second list. The second list may be the same as a first list. The first list is a list included in the indication information in the configuration file. For details, refer to the foregoing descriptions. Alternatively, the second list is different from the first list. For example, the second list is a part of content in the first list. For example, the indication information is in a form described in the foregoing Implementation C. The indication information includes the first list, the first list includes a package name of the second HAP package and a primary-secondary tag, and the primary-secondary tag indicates a primary-secondary relationship between the second HAP package and the first HAP package. When the primary-secondary tag indicates that the second HAP package is a primary package of the first HAP package, the terminal is indicated to download the second HAP package. In this case, the second list is all or a part of the first list. For example, the first list is as follows:

### Preload:

| | |
|---|---|
| HAP Name: | HAP 1 primary |
| HAP Name: | HAP 2 secondary |
| HAP Name: | HAP 3 primary |

An HAP package corresponding to the HAP 1 and the HAP 2 in the first list are a primary package of the first HAP package and need to be downloaded. However, an HAP package corresponding to the HAP 2 is a secondary package of the first HAP package and does not need to be downloaded. Therefore, the second list may not include the HAP 2. For example, the second list is as follows:

### Preload:

| | |
|---|---|
| HAP Name: | HAP 1 primary |
| HAP Name: | HAP 3 primary |

Optionally, S705 may be performed before, after, or simultaneously with S706; or S705 may be performed before, after, or simultaneously with S707; or S705 may be performed before, after, or simultaneously with S708.

S708: The terminal receives the second HAP package sent by the server.

Optionally, the second request in S707 may be used to request to download all HAP packages of the second application, and the second HAP package is included. In this case, S708 includes that the terminal receives all the HAP packages of the second application sent by the server. In other words, the first HAP package includes the configuration file, the configuration file includes the indication information, and the indication information indicates only one HAP package (the second HAP package) of the second application. The terminal downloads all the HAP packages of the second application based on the indication information.

S709: The terminal receives a second operation, where the second operation is used to start a second interface.

S710: The terminal displays the second interface, where the second interface is generated based on the second HAP package.

Principles of S709 and S710 are the same as principles of S607 and S608 in FIG. 6, and details are not described herein again.

FIG. 8 is still another schematic flowchart of a download method for an installation-free application according to an embodiment of this application. FIG. 8 may be understood as another refinement of FIG. 6. For example, S806 and S807 in FIG. 8 are used as a refinement of S606 in FIG. 6. As shown in FIG. 8, the procedure includes the following steps.

S801: A terminal receives a first operation, where the first operation is used to start a first application on the terminal, and the first application is an installation-free application.

S802: The terminal sends a first request to a server, where the first request is used to request to download the first application.

S803: The server determines a first HAP package, where the first HAP package is used to implement at least one function or interface of the first application, the first HAP package includes a configuration file, the configuration file includes indication information, the indication information indicates the terminal to download a second HAP package, and the second HAP package is used to implement at least one function or interface of a second application.

S804: The server sends the first HAP package to the terminal.

S805: The terminal displays a first interface, where the first interface is generated based on the first HAP package.

Implementation principles of S801 to S805 are the same as implementation principles of S601 to S605 in FIG. 6, and details are not described again.

S806: The server parses the indication information in the configuration file.

For example, S806 includes: The server parses the configuration file, to obtain the indication information in the configuration file, and determines the second HAP package based on the indication information. For the configuration file and the indication information, refer to the foregoing descriptions. Details are not described again.

Optionally, at least one of steps S806 and S807 may be performed before, after, or simultaneously with S804; or may be performed before, after, or simultaneously with S805.

S807: The server sends the second HAP package to the terminal.

S808: The terminal receives a second operation, where the second operation is used to start a second interface.

S809: The terminal displays the second interface, where the second interface is generated based on the second HAP package.

Principles of S808 and S809 are the same as principles of S607 and S608 in FIG. 6, and details are not described herein again.

It can be learned by comparing FIG. 7 with FIG. 8 that, in FIG. 7, the terminal parses the indication information in the configuration file, and in FIG. 8, the server parses the indication information in the configuration file. It should be understood that, in FIG. 7, the terminal parses the indication information in the configuration file. Therefore, the first HAP package sent by the server to the terminal in S704 in FIG. 7 includes the configuration file, and the configuration file needs to include the indication information. In FIG. 8, the terminal does not need to parse the indication information in the configuration file. Therefore, the first HAP package sent by the server to the terminal in S804 in FIG. 8 includes the configuration file, and the configuration file may include or may not include the indication information. Therefore, two cases are described. Case 1: The configuration file does not include the indication information. In this way, downlink transmission resources can be saved. In a possible implementation, the server deletes the indication information in the configuration file in the first HAP package, and then sends, to the terminal, the first HAP package in which the indication information is deleted. It should be noted that the server further needs to retain the complete first HAP package, that is, the first HAP package in which the indication information is not deleted, because the server further needs to perform S806, that is, parse the indication information in the configuration file. Case 2: The configuration file includes the indication information. Because the server parses the indication information in the configuration file, and the terminal does not need to parse the indication information, the terminal may ignore or skip the indication information when running the configuration file.

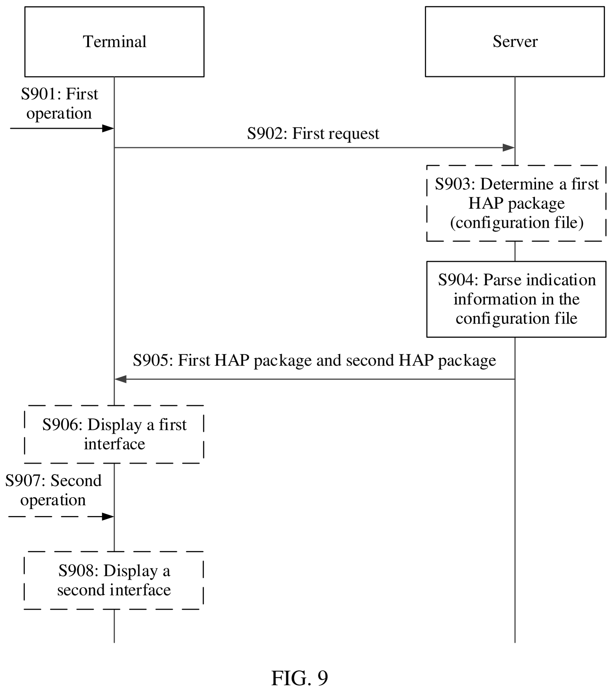

FIG. 9 is yet another schematic flowchart of a download method for an installation-free application according to an embodiment of this application. FIG. 9 may be understood as an adjustment of FIG. 8. As shown in FIG. 9, the procedure includes the following steps.

S901: A terminal receives a first operation, where the first operation is used to start a first application on the terminal, and the first application is an installation-free application.

S902: The terminal sends a first request to a server, where the first request is used to request to download the first application.

S903: The server determines a first HAP package, where the first HAP package is used to implement at least one function or interface of the first application, the first HAP package includes a configuration file, the configuration file includes indication information, the indication information indicates the terminal to download a second HAP package, and the second HAP package is used to implement at least one function or interface of a second application.

S904: The server parses the indication information in the configuration file.

S905: The server sends the first HAP package and the second HAP package to the terminal.

Optionally, the first HAP package and the second HAP package may be sent via a same transmission channel. The same transmission channel includes, for example, same time-frequency resources. The first HAP package and the second HAP package may be carried in a same message or different messages.

S906: The terminal displays a first interface, where the first interface is generated based on the first HAP package.

S907: The terminal receives a second operation, where the second operation is used to start a second interface.

S908: The terminal displays the second interface, where the second interface is generated based on the second HAP package.

FIG. 8 is compared with FIG. 9. In FIG. 8, after determining the first HAP package, the server sends the first HAP package to the terminal in time. In this way, the terminal can start the first interface as soon as possible, to avoid long waiting time of a user. Then, the server parses the indication information in the configuration file, and sends the second HAP package to the terminal. Therefore, FIG. 8 can shorten waiting duration for starting the first interface. However, the first HAP package and the second HAP package need to be delivered through two pieces of signaling. In FIG. 9, after determining the first HAP package, the server first parses the indication information in the configuration file to determine the second HAP package, and then sends the first HAP and the second HAP package to the terminal. After receiving the first HAP package, the terminal displays the first interface. Therefore, in FIG. 9, the first HAP and the second HAP package may be delivered through one piece of signaling, to reduce signaling overheads. However, waiting time for starting the first interface is longer than the waiting time for starting the first interface in FIG. 8.

FIG. 10 is still yet another schematic flowchart of a download method for an installation-free application according to an embodiment of this application. The procedure is applicable to a system. The system includes a terminal and a server, and the terminal has the software architecture shown in FIG. 2. As shown in FIG. 10, the procedure includes the following steps.

S1001: A display of the terminal receives a first operation, where the first operation is used to start a first application on the terminal, and the first application is an installation-free application.

S1002: The display of the terminal sends a start instruction to an AMS, where the start instruction instructs to start the first application.

As mentioned above, the AMS is responsible for management of an application (including an installation-free application) on the terminal, for example, starting or exiting. Therefore, when receiving the first operation used to start the first application, the display sends the start instruction to the AMS, to start the first application. For example, the start instruction may include a package name of the first application.

S1003: The AMS sends a request 1 to a BMS, where the request 1 is used to request an HAP package of the first application.

As mentioned above, the BMS is configured to manage an HAP package of an application on the terminal. It may be understood that, to start the first application, the HAP package of the first application needs to be run. Therefore, when determining that the first application needs to be started, the AMS requests the HAP package of the first application from the BMS.

S1004: The BMS sends a request 2 to an application/service center, where the request 2 is used to request the HAP package of the first application.

Optionally, before S1004, the BMS may further determine whether the HAP package of the first application exists. When determining that the HAP package of the first application does not exist, the BMS sends the request 2 to the application/service center, to request the HAP package of the first application. It should be understood that because the first application is an installation-free application, before receiving the first operation, the terminal has not downloaded the HAP package of the first application. Therefore, the HAP package of the first application does not exist on the terminal, and the BMS sends the request 2 to the application/service center.

S1005: The application/service center sends a first request to the server, where the first request is used to request to download the first application.

S1006: The server determines a first HAP package of the first application, the first HAP package is used to implement at least one function/interface of the first application, the first HAP package includes a configuration file, the configuration file includes indication information, and the indication information indicates the terminal to download a second HAP package.

S1007: The server sends the first HAP package to the terminal.

S1008: The application/service center sends a response 2 to the BMS, where the response 2 indicates that the first HAP package of the first application has been downloaded.

For example, the application/service center calls back an installation-free interface of the BMS, to perform an installation-free procedure, for example, directly run the first HAP package of the first application.

S1009: The BMS sends a response 1 to the AMS, where the response 1 indicates that the first HAP package of the first application has been run.

S1010: The AMS sends a start response to the display, to indicate that starting succeeds.

S1011: A first interface is displayed on the display, where the first interface is generated based on the first HAP package of the first application.

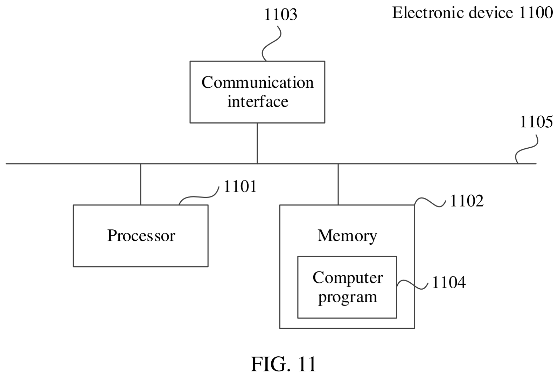

FIG. 11 is a diagram of a structure of an electronic device 1100 according to an embodiment of this application. The electronic device 1100 may be the foregoing server or terminal. As shown in FIG. 11, the electronic device 1100 may include one or more processors 1101, one or more memories 1102, a communication interface 1103, and one or more computer programs 1104. The foregoing components may be connected through one or more communication buses 1105. The one or more computer programs 1104 are stored in the memory 1102 and are configured to be executed by the one or more processors 1101, and the one or more computer programs 1104 include instructions. For example, when the electronic device 1100 is the foregoing server, the instructions may be used to perform related steps of the server in the foregoing corresponding embodiments, for example, the steps of the server in the embodiment shown in any one of FIG. 6 to FIG. 10. For another example, when the electronic device 1100 is the foregoing terminal, the instructions may be used to perform related steps of the terminal in the foregoing corresponding embodiments, for example, the steps of the terminal in the embodiment shown in any one of FIG. 6 to FIG. 10. The communication interface 1103 is configured to implement communication between the electronic device 1100 and another device. For example, the communication interface may be a transceiver.

In the foregoing embodiments provided in this application, the method provided in embodiments of this application is described from a perspective in which the electronic device (for example, a mobile phone) is used as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

All or a part of the foregoing embodiments may be implemented by using software, hardware, firmware, or any composition thereof. When software is used to implement embodiments, all or a part of embodiments may be implemented in a form of computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like. In a case in which no conflict occurs, the solutions in the foregoing embodiments may be combined for use.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. A download method for an installation-free application, applied to a terminal, wherein the method comprises:
sending a first request to a server, wherein the first request is used to request to download a first application, and the first application is an installation-free application;
receiving a first application software package sent by the server, wherein the first application software package is used to implement at least one function or interface of the first application, the first application software package comprises a configuration file, the configuration file comprises indication information, the indication information indicates a second application software package, and the second application software package is used to implement at least one function or interface of a second application;
sending a second request to the server based on the indication information, wherein the second request is used to request to download the second application software package; and
receiving the second application software package sent by the server.

2. The method according to claim 1, wherein the second application and the first application are a same application or different applications.

3. The method according to claim 2, wherein the second application and the first application are the same application, and the first application software package and the second application software package are used to implement different functions or interfaces of the same application.

4. The method according to claim 1, wherein the second application and the first application satisfy at least one of the following:
the second application and the first application belong to a same developer; or
the second application and the first application are pre-configured associated applications; or
the second application and the first application are type-related applications; or
a quantity of times of switching between the second application and the first application is greater than a preset quantity of times.

5. The method according to any one of claims 1 to 4, wherein sending the second request to the server comprises:
sending the second request to the server when a function or an interface corresponding to the first application software package is started.

6. The method according to any one of claims 1 to 5, before sending the second request to the server, further comprising:
outputting first prompt information, wherein the first prompt information indicates whether to download the second application software package; and
receiving a first confirmation instruction, wherein the first confirmation instruction instructs to confirm downloading of the second application software package.

7. The method according to any one of claims 1 to 5, wherein the indication information further indicates the terminal to download a third application software package, and before sending the second request to the server, the method further comprises:
outputting second prompt information, wherein the second prompt information indicates whether to download the second application software package and the third application software package; and
receiving a second confirmation instruction, wherein the second confirmation instruction instructs to confirm downloading of the second application software package; and
sending the second request to the server comprises:
sending the second request to the server, wherein the second request comprises a package name of the second application software package and does not comprise a package name of the third application software package.

8. The method according to any one of claims 1 to 7, wherein the indication information comprises the package name of the second application software package.

9. The method according to claim 8, wherein the indication information further comprises:
at least one of a package name of the second application, a first primary-secondary tag, and a second primary-secondary tag;
the first primary-secondary tag indicates that the second application software package is a primary package or a secondary package of the first application software package; and
the second primary-secondary tag indicates that the second application is a primary application or a secondary application of the first application.

10. The method according to any one of claims 1 to 9, wherein that the first application software package is used to implement the at least one function or interface of the first application comprises: the first application software package is used to start a home page of the first application.

11. The method according to any one of claims 1 to 10, wherein the indication information indicates a plurality of application software packages, the plurality of application software packages comprise the second application software package, and the second request is used to request to download the plurality of application software packages; and
the method further comprises:
receiving another application software package sent by the server, wherein the another application software package is an application software package other than the second application software package in the plurality of application software packages.

12. A download method for an installation-free application, applied to a terminal, wherein the method comprises:
sending a first request to a server, wherein the first request is used to request to download a first application, and the first application is an installation-free application; and
receiving a first application software package and a second application software package that are sent by the terminal, wherein the first application software package is used to implement at least one function or interface of the first application, and the second application software package is used to implement at least one function or interface of a second application, wherein
the second application and the first application are different applications.

13. A download method for an installation-free application, applied to a server, wherein the method comprises:
receiving a first request sent by a terminal, wherein the first request is used to request to download a first application, and the first application is an installation-free application;
sending a first application software package to the terminal, wherein the first application software package is used to implement at least one function or interface of the first application, the first application software package comprises a configuration file, the configuration file comprises indication information, the indication information indicates a second application software package, and the second application software package is used to implement at least one function or interface of a second application;
receiving a second request sent by the terminal, wherein the second request is used to request to download the second application software package; and
sending the second application software package to the terminal.

14. The method according to claim 13, wherein the second application and the first application are a same application or different applications.

15. The method according to claim 14, wherein the second application and the first application are the same application, and the first application software package and the second application software package are used to implement different functions or interfaces of the same application.

16. The method according to claim 13, wherein the second application and the first application satisfy at least one of the following:
the second application and the first application belong to a same developer; or
the second application and the first application are pre-configured associated applications; or
the second application and the first application are type-related applications; or
a quantity of times of switching between the second application and the first application is greater than a preset quantity of times.

17. The method according to any one of claims 13 to 16, wherein the indication information further indicates a third application software package, and the second request comprises a package name of the second application software package and does not comprise a package name of the third application software package.

18. The method according to any one of claims 13 to 17, wherein the indication information comprises the package name of the second application software package.

19. The method according to claim 18, wherein the indication information further comprises:
at least one of a package name of the second application, a first primary-secondary tag, and a second primary-secondary tag;
the first primary-secondary tag indicates that the second application software package is a primary package or a secondary package of the first application software package; and
the second primary-secondary tag indicates that the second application is a primary application or a secondary application of the first application.

20. The method according to any one of claims 13 to 19, wherein that the first application software package is used to implement the at least one function or interface of the first application comprises: the first application software package is used to start a home page of the first application.

21. The method according to any one of claims 13 to 20, wherein the indication information indicates a plurality of application software packages, the plurality of application software packages comprise the second application software package, and the second request is used to request to download the plurality of application software packages; and the method further comprises:
sending another application software package to the terminal, wherein the another application software package is an application software package other than the second application software package in the plurality of application software packages.

22. A download method for an installation-free application, applied to a server, wherein the method comprises:
receiving a first request sent by a terminal, wherein the first request is used to request to download a first application, and the first application is an installation-free application;
determining a first application software package of the first application based on the first request, wherein the first application software package is used to implement at least one function or interface of the first application, the first application software package comprises a configuration file, the configuration file comprises indication information, the indication information indicates a second application software package, and the second application software package is used to implement at least one function or interface of a second application; and
sending the first application software package and the second application software package to the terminal based on the indication information.

23. A communication system, comprising a server and a terminal, wherein
the terminal is configured to perform steps in the method according to any one of claims 1 to 12; and
the server is configured to perform steps in the method according to any one of claims 13 to 22.

24. An electronic device, comprising:
a processor, a memory, and one or more programs, wherein
the one or more programs are stored in the memory, the one or more programs comprise instructions, and when the instructions are executed by the processor, the electronic device is enabled to perform steps in the method according to any one of claims 1 to 22.

25. A computer-readable storage medium, wherein the computer-readable storage medium is configured to store a computer program, and when the computer program is run on a computer, the computer is enabled to perform the method according to any one of claims 1 to 22.

26. A computer program product, comprising a computer program, wherein when the computer program is run on a computer, the computer is enabled to perform the method according to any one of claims 1 to 22.
